# EUROPEAN PATENT APPLICATION

(11) **EP 2 705 901 A1**
(43) Date of publication of application: **12.03.2014**
(21) Application number: 12183334.7
(22) Date of filing: 06.09.2012
(51) Int. Cl.: B01J 23/44, B01J 23/62, B01J 23/38, B01J 35/00, B01J 35/08, B01J 37/03, B01J 37/02, B01J 37/18, C01B 15/01, C01B 15/023, B01J 23/66, B01J 23/50

(54) **Hydrogenation catalysts, method for making same and use thereof for preparing hydrogen peroxide**

(71) Applicant: Solvay SA, 1120 Bruxelles (BE)
(72) Inventor: Lemaire, Arnaud, 5000 Namur (BE); Dournel, Pierre, 1030 Brussels (BE); Deschrijver, Paul, 1680 Lennik (BE)
(74) Representative: Vande Gucht, Anne

(57) **Abstract**

The present invention describes a hydrogenation catalyst based on palladium on an aluminium oxide (Al₂O₃) support, on a silicon oxide (SiO₂) support or on an aluminosilicate support, wherein the catalyst comprises, with respect to the catalyst as 100% by weight, an amount of palladium from 0.1 to 0.9 % by weight and an amount of tin of up to 0.045% by weight, and wherein optionally the catalyst further comprises silver in an amount of up to 0.06 % by. In an embodiment of the invention the preferred support is an aluminium oxide (Al₂O₃) support, particularly a delta-aluminium oxide (delta-Al₂O₃) support. The catalyst may be used in manifold hydrogenation types, and preferably the catalyst is proposed to be used in the manufacture of hydrogen peroxide by the auto-oxidation process.

## Description

The present invention relates to hydrogenation catalysts based on palladium which is deposited on an aluminium oxide (Al₂O₃), a silicon oxide (SiO₂) or on an aluminosilicate support and which also contains small amounts of additive metal compounds, to the process of manufacture of the hydrogenation catalysts and to their use in hydrogenation reactions and in particular in preparing hydrogen peroxide.

Next to catalytically active noble metals like platinum or rhodium, a frequently used catalytic metal for hydrogenations is palladium (Pd), optionally in combination with other catalytic metals. The catalytically active noble metals can be non-supported or supported on inorganic materials such as silica (SiO₂) or alumina (Al₂O₃).

Processes that utilize such catalytically active metals dispersed on refractory supports are common in the chemical process industry. A major group of processes included in this category are catalytic hydrogenations. Several important catalytic hydrogenations include, for example, the conversion of benzene to cyclohexane, the hydrogenation of edible oils to yield margerine-type products and the conversion of unsaturated oxygen-containing compounds, aldehydes and ketones, to alcohols.

Catalytic hydrogenations are also used in processes for the production of hydrogen peroxide. The synthesis of hydrogen peroxide with the involvement of hydrogenation catalysts comprising e.g. palladium non-supported or supported (e.g. supported on silica or alumina) is a reaction which has been known for a long time.

For example, on the one hand, catalysts based on palladium (Pd) are also used in the direct production of hydrogen peroxide, e.g. as described in the US 6,346,228 related to a hydrophobic multicomponent catalyst comprising a hydrophobic polymer membrane deposited on a Pd containing acidic catalyst, or as described in US 6,432,376 and in US 6,448,199 for a membrane process for the production of hydrogen peroxide by direct oxidation of hydrogen by oxygen using a hydrophobic composite Pd-membrane catalysts that may comprise silver in addition to palladium.

The Patent Application EP 1 038 833 A1 discloses precious metal-based hydrogenation catalysts for direct synthesis of hydrogen peroxide from hydrogen and oxygen in the presence of a supported catalyst having, as active components, palladium or at least two metals selected from platinum group metals and the first subgroup metals. The catalysts preferably contain active components of palladium >80, and/or gold 0.05-5, and/or platinum 0.05-15, and/or Ag 0-5 weight% and are supported on Al₂O₃, TiO₂, ZrO₂, SiO₂, and zeolites, optionally in the presence of an inorganic binder (especially water glass). The catalysts are manufactured by spray or flame pyrolysis.

The Patent Application EP 1 308 416 A1 employs a catalyst in the direct synthesis which comprises noble metal and wherein the catalysts preferably are bonded to supports. The catalytically active component of the catalyst comprises one or more noble metals in the pure form or in the form of alloys. Preferred noble metals are the platinum metals, in particular palladium and platinum, and gold. Elements from the series consisting of Rh, Ru, Ir, Cu and Ag can additionally be present. Particularly preferred catalysts according to EP 1308416 A1 comprise as the catalytically active metal at least 80 wt. % palladium and 0-20 wt. % platinum, and 0-20 wt. % gold and/or 0-5 wt. % silver in alloyed or non-alloyed form. In a particularly preferred embodiment, a catalyst fixed bed in which the catalytically active particles have been produced by a spray or flame pyrolysis process according to EP 1 038 833 A1 is used.

In the International Patent Application WO 98/16463 A1 a process is disclosed for manufacture of hydrogen peroxide solutions with a H₂O₂ content of equal or greater than 2.5 wt. % by continuous reaction of hydrogen and oxygen in an aqueous or alcoholic reaction medium on a Pd-containing catalyst. The catalyst is e.g. a Pd-Ag catalyst for direct production of H₂O₂ with a molar ratio of Pd to Ag in the range of 100:1 to 1:10.

On the other hand, for example, catalysts like palladium non-supported or e.g. supported on SiO₂ or Al₂O₃ may be used in the process for the production of hydrogen peroxide by the autoxidation process (AO process). An integral part of this process involves the catalytic hydrogenation of various substituted anthraquinones to the corresponding anthrahydroquinones. A catalyst commonly employed in this hydrogenation process is palladium either supported or as palladium black. One supported catalyst currently in use is produced by solution precipitation and deposition of palladium on the chosen support. Commonly used support materials are silica, alumina or aluminosilicate. In the following some examples for catalysts described in the state of the art for the production of hydrogen peroxide by the AO process shall be given.

The Patent Application EP 1 195 197 A1 discloses a catalyst carrier comprising a fiber paper impregnated with a slurry comprising silica sol, micro fibers and a filler. Particularly disclosed amongst other things are a method for preparing the catalyst carrier; a catalyst comprising the catalyst carrier on which at least one catalytically active material is deposited; and a process for producing hydrogen peroxide according to anthraquinone process, which involves alternate oxidizing and hydrogenating the anthraquinones or derivatives in a working solution of organic solvents, where the working solution and gaseous hydrogen are brought to flow through a bed of at least one structured catalyst.

The International Patent Application WO 97/43042 discloses catalyst compositions comprising a nanoparticulate catalytically active metal on a refractory support and a process for preparing the said compositions by the physical vapor deposition of the active metal by sputtering onto a refractory support which has been cooled such that the deposited metal atoms have limited mobility. Also, a process for the reduction of anthraquinones to anthrahydroquinones in the preparation of hydrogen peroxide by hydrogenation is disclosed, wherein the above catalyst is used as the hydrogenation catalyst to prepare hydrogen peroxide. The catalytically active metal, or combination of active metals, is selected from the group consisting of platinum, palladium, rhodium, iridium, ruthenium, silver, gold, copper, mercury and rhenium. Especially, the catalytically active metal is palladium, including combinations therewith. The refractory support is e.g. selected from the group consisting of alumina, (various forms), silica, titania, carbon (various forms), zirconia and magnesia. Especially, the refractory support is alumina, preferably gamma-alumina.

The International Patent Application WO 98/015350 A2 concerns hydrogenation catalysts with a palladium, platinum or rhodium base comprising at least one other metal M, deposited on silicon or zirconium oxide supports. The WO 98/015350 A2 also concerns the method for making these catalysts by successive impregnation of the support using palladium, platinum or rhodium and another metal M. These catalysts may be used in hydrogenation reactions and particularly for preparing hydrogen peroxide. For example, such a catalyst can have a composition of 0.5-2.5 wt. % Pd and 0.5-2.5 wt. % Ag.

In the International Patent Application WO 2010/077262 A1 a catalyst comprising palladium and silver supported on an inorganic carrier is disclosed in the context of a process for regenerating a used catalyst comprising two or more noble metals supported on a carrier. Described noble metals include palladium, gold, silver, platinum, iridium, ruthenium, rhodium, osmium, rhenium, and mixtures thereof, and particularly the noble metals are Pd, Pt, Au, Ag, and mixtures thereof. Typically, the amount of noble metal present in the catalyst is in the range of from 0.005 to 20 weight percent (wt. %), e.g. in the range of from 0.01 to 5 wt.%. Catalysts comprising 0.001 to 2 wt. % palladium are disclosed. The catalyst comprises as a transition metal a group 3-12 element. The first row of them is from Sc to Zn. Particular transition metals are Pd, Pt, Au, Ag, Ni, Cu, Zn, Mn, Fe, Co, Pb, Ru, Rh, Re, Os, and especially the transition metals are Pt, Au, Ag, Cu, Ru, Rh, Re, and mixtures thereof. As preferred transition metals Ag, Au, and mixtures thereof are proposed. Typically, the amount of the transition metal present in the catalyst is in the range of from 0.01 to 20 wt. %, preferably 0.1 to 5 wt.%.

As stated already above, it is known to use aluminium oxide (Al₂O₃) supported palladium catalyst in the synthesis of hydrogen peroxide. Commonly, such alumina support is a gamma-aluminium oxide (gamma-alumina, gamma-Al₂O₃). The standard synthesis of hydrogen peroxide is an auto-oxidation (AO) process is a cyclic process for the production of hydrogen peroxide based on three basic steps: catalytic hydrogenation of active anthraquinone species solvated in organic media, oxidation and then separation (liquid-liquid extraction) of hydrogen peroxide from organic phase. Typically, ethyl or amyl anthraquinone are used. For the sake of clarity, anthraquinone in the following text states for alkyl anthraquinone derivative. Industrial synthesis of hydrogen peroxide is predominantly achieved by using the Riedel-Pfleiderer process (originally disclosed in US patents 2,158,525 and 2,215,883). This well-known large scale cyclic production process of hydrogen peroxide makes use of the autoxidation of a 2-alkylanthrahydroquinone compound to the corresponding 2-alkylanthraquinone which results in the formation of hydrogen peroxide.

Such AO-processes based on the original Riedel-Pfleiderer concept are designed for the industrial large-scale and even up to mega-scale production of hydrogen peroxide, and have been widely described in the art and are well-known as large-to-mega scale manufacturing processes. Thus, conventional hydrogen peroxide production processes are normally carried out in large- to mega-scale hydrogen peroxide production plants with production capacities of about 40,000 to 330,000 (metric) tons per annum of hydrogen peroxide (100%) per year. Thus, currently there are plants in industrial operation with a production capacity of e.g. 40 to 50 ktpa (kilo tons per annum) at the low end, with a capacity of up to 160 ktpa, and the world largest mega-plants provide a capacity of 230 ktpa (Antwerp) and 330 ktpa (Thailand). In these processes, normally the production capacity in case of fixed beds is limited to 50 ktpa and usually plants with production capacities above 50 ktpa are operated with fluid-bed reactors.

Today, there is also an interest in smaller size AO-processes (mini-AO processes) with production capacities for example in the range of 2 to 10 kt/a (calculated as 100 % hydrogen peroxide) production unit, which may be installed on customer site and provides a simple low-productivity and user-friendly plant. Although, hydrogenation catalysts known from the classical large-to-mega scale AO-processes can be used also in such smaller size AO-processes (mini-AO processes), there is a need to adapt and optimize the hydrogenation catalyst for the purpose of such a smaller size AO-processes (mini-AO processes) for the synthesis of hydrogen peroxide (H₂O₂). On the other hand, such optimized catalysts could also provide advantages in a classical large-to-mega scale AO-process. As an example, but without limitation, such desired advantages can pertain to high and stable catalytic activity, the selectivity of the catalyst in terms of in terms of anthraquinone derivative degradation, meaning less over-hydrogenation, i.e. limited formation of tetrahydro species and derivatives of the anthraquinone, and to the long-term stability of the catalyst, i.e. the thermodynamic stability or reduced leaching of the catalytic metal (palladium).

The object of the present invention is to provide other hydrogenation catalysts which exhibit a high and stable catalytic activity.

Another object of the present invention is to provide hydrogenation catalysts which exhibit a high catalytic selectivity. Thus, the catalysts according to the invention, when they are used for the synthesis of hydrogen peroxide by the AO process (auto-oxidation process), limit the formation of decomposition products.

Yet another object of the present invention is to provide hydrogenation catalysts which are suitable for being used in the synthesis of hydrogen peroxide by smaller size AO-processes (mini-AO processes).

To this end, the invention relates to hydrogenation catalysts based on palladium which is deposited on an aluminium oxide (Al₂O₃), a silicon oxide (SiO₂) or an aluminosilicate support and which also contains a small amount of tin and optionally of silver as an additive metal compound.

The invention also relates to the process for the manufacture of these catalysts and to the use of these catalysts in hydrogenation reactions and in particular in preparing hydrogen peroxide, e.g. in preparing hydrogen peroxide by the AO process (auto-oxidation process) and preferably in the synthesis of hydrogen peroxide by smaller size AO-processes (mini-AO processes).

### Brief Description of the Figures:

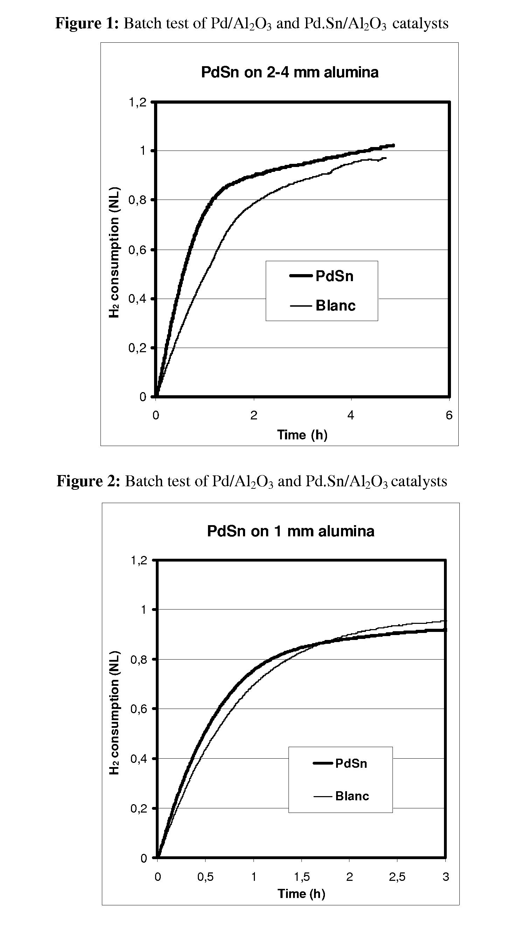

*Figure 1**:* Hydrogen consumption batch test of Pd/Al₂O₃ and Pd. Sn/Al₂O₃ (2 - 4 mm catalyst beads); e.g. hydrogen uptake N1 H2*kg-1 ws versus time (min.).
*Figure 2**:* Hydrogen consumption batch test of Pd/Al₂O₃ and Pd.Sn/Al₂O₃ (1 mm catalyst beads); e.g. hydrogen uptake N1 H2*kg-1 ws; working solution (ws) versus time (min.)
*Figure* **3****:** Average particle diameter (for 50% of particles) = +/-2.800 mm; refer to Example 7 (method for determining the particle size (sieved) of e.g. 2 - 4 mm beads)
*Figure 4**:* Average particle diameter (for 50% of particles) = +/-0.980 mm; refer to Example 8 (method for determining the particle size (laser) of e.g. 1 mm beads)
*Figure* **5****:** Selectivity of Pd.Sn catalyst beads (2 - 4 mm, on alumina); refer to Example 6 (evaluation of activity and selectivity of catalysts of the invention)

The meanings of the abbreviations used in the Figures are the following: "ws" means "working solution"; "ATQ" means "amyl tetrahydro anthraquinone";"AA" means "amyl anthrone" or shortly "anthrone";"AO" means "amyl oxanthrone" or shortly "oxanthrone"; "N1 herein means "normal liter".

In a first embodiment of the invention, the catalysts comprise, on the one hand, a defined amount of palladium and, on the other hand, a defined amount of tin and optionally of silver on an aluminium oxide (Al₂O₃), a silicon oxide (SiO₂) or an aluminosilicate support. Beneficial results have been obtained by combining palladium, tin and optionally silver on such supports. The catalysts of the first embodiment of the invention is therefore a hydrogenation catalyst based on palladium on an aluminium oxide (Al₂O₃), a silicon oxide (SiO₂) or an aluminosilicate support, wherein the catalyst comprises an amount of palladium from 0.1 to 0.9% by weight with respect to the weight of the catalyst, an amount of tin of up to 0.045% by weight, e.g. more precisely an amount of tin of 0.0005% to 0.045% by weight, and optionally an amount of silver of up to 0.06% by weight, e.g. more precisely optionally an amount of silver of 0.01% to 0.06% by weight; each amount with respect to the weight of the catalyst.

Accordingly, the invention pertains to bimetallic Pd+Sn catalysts and optionally to trimetallic Pd+Sn+Ag catalysts on a variety of inorganic any catalyst support materials like aluminium oxide (Al₂O₃), silicon oxide (SiO₂) or aluminosilicate support. These catalysts of the invention are e.g. beneficial in the context of the manufacturing of hydrogen peroxide according to the AO-process, e.g. the classical size AO-process with large to mega-scale production capacities, but particularly in smaller-size AO-process, e.g. small to medium size AO-processes, herein also referred to as "mini-AO-processes". One of the prerequisite of designing a competitive mini AO process is the use of an active as well as a selective hydrogenation catalyst. The catalyst should be able to promote the desired following reaction A: AQ + H2 => AQH2 for achieving a sustainable productivity of hydrogen peroxide, and further the catalyst should be able to prevent the undesired overhydrogenation reaction B: AQ + 2H2 => AQH4, because reaction B is eventually resulting in non-useful degraded compounds, and also may cause loss of the working solution. Said pre-conditions of activity and selectivity are fulfilled by the bimetallic Pd+Sn catalysts and the optional trimetallic Pd+Sn+Ag catalysts of the present invention. Without being bound by theory, the concept of the invention is to add a metallic promoter and/or cocatalyst to the typical Pd supported hydrogenation catalyst of the AO-process that would allow the tuning of the reaction pathway in the favorable direction of reaction A while at the same time minimizing the unfavorable reaction B. Thus, according to the invention it was found that the addition of tin (Sn), as a lewis acid center closely to the Pd-catalytic atoms seems to favor the reaction A, assuming, without being bound by theory, that by the addition of tin (Sn) promotes an activation of the AQ's C=O bond. Furthermore, by alloying of the Pd-catalytic with silver as a co-catalytic component, without being bound by theory, a dilution and reduction of multiple adsorption sites of Pd-catalytic component is achieved during the hydrogenation reaction of the AO-process, and thereby reducing the undesired reaction B. In summary, the addition of the tin (Sn) and silver (Ag) to Pd-based catalysts seems to lead up to both beneficial effects as described herein, e.g. the promotion of reaction A and reduction of overhydrogenation reaction B. These results are achievable according to the present invention with Pd+Sn and Pd+Sn+Ag catalyst on a variety of supports with very good reproducibility, for example, on alumina supports as described in more detail further below.

In one embodiment of the invention, the catalysts are bimetallic, that is to say that the catalyst does not additionally comprise any other noble metals, e.g. such as silver. The catalysts of this embodiment of the invention is therefore a hydrogenation catalyst based on palladium on an aluminium oxide (Al₂O₃), a silicon oxide (SiO₂) or an aluminosilicate support, wherein the catalyst comprises a bimetallic catalytic component consisting of an amount of palladium from 0.1 to 0.9% and an amount of tin of up to 0.045% by weight, e.g. more precisely an amount of tin from 0.0005% up to 0.045% by weight; each amount with respect to the weight of the catalyst.

In another embodiment of the invention, the catalysts are trimetallic, that is to say that the catalyst additionally comprises as another noble metal silver. The catalysts of this embodiment of the invention is therefore a hydrogenation catalyst based on palladium on an aluminium oxide (Al₂O₃), a silicon oxide (SiO₂) or an aluminosilicate support, wherein the catalyst comprises a trimetallic catalytic component consisting of an amount of palladium from 0.1 to 0.9% and an amount of tin of up to 0.045% by weight, e.g. more precisely an amount of tin from 0.0005% up to 0.045% by weight, and an additional amount of silver of up to 0.06% by weight, more precisely an amount of silver of 0.01% to 0.06% by weight; each amount with respect to the weight of the catalyst.

These bimetallic and trimetallic catalysts are particularly suitable for being used in the synthesis of hydrogen peroxide by the AO process (auto-oxidation process), and preferably for being used in the synthesis of hydrogen peroxide by smaller size AO-processes (mini-AO processes).

The amount of palladium in the catalysts can be as given above in the range of 0.1 to 0.9% by weight (more precisely 0.10 to 0.90% by weight), and the amount is advantageously in the range of 0.2 to 0.8% by weight (more precisely 0.20 to 0.80% by weight) and especially in the range of 0.2 to 0.7% by weight (more precisely 0.20 to 0.70% by weight); each range being given with respect to the total weight of the catalyst, that is to say of the combined metal compounds and support materials. In particular embodiments of the invention the catalysts comprises an amount of palladium from 0.2 to 0.6% by weight (more precisely 0.20 to 0.60% by weight), preferably an amount of palladium from 0.25 to 0.55% by weight, and in a more preferred embodiment of the invention the catalysts comprises an amount of palladium of about 0.3% by weight or of 0.5% by weight (more precisely 0.30% by weight or 0.50% by weight); each range being given with respect to the total weight of the catalyst.

As an example, but without limitation, the catalytic metal palladium can be present in the catalyst in an amount of about 0.10% by weight, about 0.15% by weight, about 0.20% by weight, about 0.25% by weight, about 0.30% by weight, about 0.35% by weight, about 0.40% by weight, about % by weight, about 0.45% by weight, about 0.50% by weight, about 0.55% by weight, about 0.60% by weight, about 0.65% by weight, about 0.70% by weight, about 0.75% by weight, about 0.80% by weight, about 0.85% by weight, or about 0.90% by weight; each amount in % by weight being recited here before with respect to the total weight of the catalyst. Each of these amounts of palladium may be combined with each of the amounts given below for tin and/or the optional amounts of silver.

In one preferred embodiment of the invention the catalyst comprises palladium in an amount from 0.25 to 0.35% by weight, and most preferred in amount of about 0.3% by weight (more precisely of about 0.30% by weight), with respect to the weight of the catalyst. As an example, but without limitation, the catalytic metal palladium can be present in these preferred catalysts in an amount of about 0.25% by weight, about 0.26% by weight, about 0.27% by weight, about 0.28% by weight, about 0.29% by weight, about 0.30% by weight, about 0.31% by weight, about 0.32% by weight, about 0.33% by weight, about 0.34% by weight, or about 0.35% by weight; each amount in % by weight being recited here before with respect to the total weight of the catalyst. In this embodiment tin may be present in amounts % by weight as indicated above and further detailed below. In particular this embodiment is very suitable when catalyst carriers with a particle size in the range of 2 to 4 mm, in particular 2 to 3 mm; for more details with regard to the particle size see further below.

In another preferred embodiment of the invention the catalyst comprises palladium in an amount from 0.3 to 0.7% by weight, preferably palladium in an amount from 0.45 to 0.55% by weight, and most preferred in amount of about 0.5% by weight (more precisely of about 0.50% by weight), with respect to the weight of the catalyst. As an example, but without limitation, the catalytic metal palladium can be present in the catalysts of this embodiment in an amount of about 0.3% by weight, about 0.35% by weight, about 0.4% by weight, about 0.45% by weight, about 0.5% by weight, about 0.55% by weight, about 0.6% by weight, about 0.65% by weight, or about 0.7% by weight; each amount in % by weight being recited here before with respect to the total weight of the catalyst. Further, the catalytic metal palladium can be present in said preferred catalysts in an amount of about 0.45% by weight, about 0.46% by weight, about 0.47% by weight, about 0.48% by weight, about 0.49% by weight, about 0.50% by weight, about 0.51% by weight, about 0.52% by weight, about 0.53% by weight, about 0.54% by weight, or about 0.55% by weight; each amount in % by weight being recited here before with respect to the total weight of the catalyst. In this embodiment tin may be present in amounts % by weight as indicated above and further detailed below. In particular these embodiments are very suitable when catalyst carriers (supports) with a smaller particle size than 2 mm shall be used, for example with a smaller particle size in the range of about 0.5 to 1.5 mm, in particular 1 mm; for more details with regard to the particle size see further below.

The meaning of the term "about" is that the amount of palladium in the (fresh) catalyst may somewhat vary around the given values by e.g. up to +/-0.01% by weight, preferably up to +/- 0.005% by weight with respect to the total weight of the catalyst. Thus, for example, a catalyst with an amount of 0.3% (0.30%) by weight may slightly vary in the exact amount of palladium such as 0.3% (0.30%) +/- 0.01% by weight, preferably such as 0.3% (0.300%) +/-0.005% by weight, each with respect to the total weight of the catalyst. Or, for example, a catalyst with an amount of 0.5% (0.50%) by weight may slightly vary in the exact amount of palladium such as 0.5% (0.50%) +/- 0.01% by weight, preferably such as 0.5% (0.500%) +/- 0.005% by weight, each with respect to the total weight of the catalyst.

According to the invention the catalyst contains as additional metal tin in a defined amount. The amount of tin in the catalysts can be as given above in the range of 0.0005 to 0.045% by weight (more precisely of 0.0005 to 0.0450% by weight), and the amount is advantageously in the range of 0.001 to 0.04% by weight (more precisely of 0.001 to 0.040% by weight); each range given with respect to the total weight of the catalyst, that is to say of the combined metal compounds and support materials. In particular embodiments of the invention the catalysts comprises an amount of tin in the range of 0.005 to 0.0375% by weight (more precisely of 0.0050 to 0.0375% by weight), each with respect to the total weight of the catalyst; and in a preferred embodiment of the invention the catalysts comprise an amount of tin from 0.01 to 0.035% by weight (more precisely of 0.010 to 0.035% by weight) with respect to the total weight of the catalyst. As an example, but without limitation, the additional metal tin can be present in the catalyst in an amount of about 0.0005% by weight, about 0.001% by weight, about 0.015% by weight, about 0.020% by weight, about 0.025% by weight, about 0.030% by weight, about 0.035% by weight, about 0.0375% by weight, about 0.040% by weight, about 0.0425% by weight, or about 0.045% by weight; each amount in % by weight being recited here before with respect to the total weight of the catalyst.

In a very preferred embodiment of the invention the catalyst comprises tin (Sn) in an amount from 0.015 to 0.035% by weight, more preferred in amount of 0.020 to 0.035%, in particular in amount of 0.020 to 0.032% and most preferred in amount of about 0.030% by weight, with respect to the weight of the catalyst. As an example, but without limitation, the additional metal tin can be present in these preferred catalysts in an amount of about 0.015% by weight, about 0.020% by weight, about 0.025% by weight, about 0.030% by weight, about 0.031% by weight, about 0.032% by weight, about 0.033% by weight, about 0.034% by weight, or about 0.035% by weight; each amount in % by weight being recited here before with respect to the total weight of the catalyst.

The meaning of the term "about" is that the amount of tin in the (fresh) catalyst may somewhat vary around the given values by e.g. up to +/- 0.0001% for catalyst with an amount of tin <0.001 % by weight; and for catalysts with an amount of tin of 0.0010 to 0.0450% by weight it may somewhat vary around the given values by up to +/- 0.001% by weight, preferably up to +/- 0.0005% by weight with respect to the total weight of the catalyst. Thus, for example, a catalyst with an amount of 0.03% (more precisely 0.030%) by weight may slightly vary in the exact amount of tin such as 0.03% (0.0300%) +/- 0.001% by weight, preferably such as 0.030% (0.0300%) +/- 0.0005% by weight, each with respect to the total weight of the catalyst.

The catalyst of the invention may contain optionally as additional catalytic metal silver in a defined amount. The optional amount of silver in the catalysts can be as given above in the range of from 0.01 to 0.06% by weight (more precisely of 0.010 to 0.060% by weight), particularly from 0.015 to 0.06% by weight (more precisely of 0.015 to 0.060% by weight), preferably 0.02 to 0.06% by weight (more precisely of 0.020 to 0.060% by weight), more preferably 0.025 to 0.06% by weight (more precisely of 0.025 to 0.060% by weight); each range given with respect to the total weight of the catalyst, that is to say of the combined metal compounds and support materials.

Advantageously, the amount of silver may be in the range of 0.03 to 0.06% by weight (more precisely of 0.030 to 0.060% by weight), and particularly the amount is in the range of 0.035 to 0.06% by weight (more precisely of 0.035 to 0.060% by weight) and particularly in the range of 0.04 to 0.06% by weight (more precisely of 0.040 to 0.060% by weight); each range given with respect to the total weight of the catalyst, that is to say of the combined metal compounds and support materials. In more particular embodiments of the invention the catalysts may comprise an amount of silver from 0.035 to 0.055% by weight and especially from 0.040 to 0.055% by weight, each with respect to the total weight of the catalyst. Preferably, in this embodiment of the invention the catalysts comprise an amount of silver from 0.04 to 0.05% by weight (more precisely of 0.040 to 0.050% by weight) with respect to the total weight of the catalyst. As an example for these embodiments, but without limitation, the additional catalytic metal silver can be present in the catalyst in an amount of about 0.030% by weight, about 0.035% by weight, about 0.040% by weight, about 0.045% by weight, about 0.050% by weight, about 0.055% by weight, or about 0.060% by weight; each amount in % by weight being recited here before with respect to the total weight of the catalyst.

In a very preferred embodiment of the invention with the additional catalytic metal silver, the catalyst comprises silver in an amount from 0.040 to 0.055% by weight, more preferred in amount of 0.040 to 0.050% and most preferred in amount of about 0.045% by weight, with respect to the weight of the catalyst. As an example for this embodiment, but without limitation, the additional catalytic metal silver can be present in these preferred catalysts in an amount of about 0.041% by weight, about 0.042% by weight, about 0.043% by weight, about 0.044% by weight, about 0.045% by weight, about 0.046% by weight, about 0.047% by weight, about 0.048% by weight, about 0.049% by weight, or about 0.050% by weight; each amount in % by weight being recited here before with respect to the total weight of the catalyst.

The meaning of the term "about" is that the amount of silver in the (fresh) catalyst may somewhat vary around the given values by e.g. up to +/- 0.001% by weight, preferably up to +/- 0.0005% by weight with respect to the total weight of the catalyst. Thus, for example, a catalyst with an amount of 0.045% (more precisely 0.0450%) by weight may slightly vary in the exact amount of silver such as 0.045% (0.0450%) +/- 0.001% by weight, preferably such as 0.045% (0.0450%) +/- 0.0005% by weight, each with respect to the total weight of the catalyst.

Typically, the catalytic metal component in the hydrogenation catalysts based on palladium on an aluminium oxide (Al₂O₃), a silicon oxide (SiO2) or an aluminosilicate support according to the present invention comprises, and preferably essentially consists of (in the following % by weight is always given with respect to the weight of the total catalyst composition as 100 %): palladium from 0.1 to 0.9% by weight, an amount of tin in the range of from 0.0005% to 0.045% by weight, and optionally silver in an amount of up to 0.06% by weight, particularly optional silver in an amount of from 0.01 to 0.06% by weight. The given amounts of the metals palladium, tin and silver in % by weight for the metal component may take the ranges or individual amounts as stated above for each of said metals or any combination thereof.

For example, in this embodiment the invention is directed to a hydrogenation catalyst based on palladium on an aluminium oxide (Al₂O₃), on a silicon oxide (SiO₂) or on an aluminosilicate support, comprising with respect to the total weight of the catalyst: palladium from 0.1 to 0.9% by weight; and tin from 0.0005 to 0.0450% by weight, preferably from 0.001 to 0.040% by weight, more preferably from 0.005 to 0.0375% by weight, in particular from 0.010 to 0.035% by weight, even more preferably from 0.015 to 0.035% by weight, in particular from 0.020 to 0.032% by weight, and most preferably of about 0.030% by weight; and wherein optionally the catalyst further comprises silver in an amount of up to 0.06 % by weight; particularly optional silver in an amount of from 0.01 to 0.06% by weight, and the silicon oxide (SiO₂) and/or aluminium oxide (Al₂O₃) support adding up to 100% by weight of the catalyst.

Preferably, in connection with the before indicated amounts of tin, in the hydrogenation catalyst of the invention based on palladium on an aluminium oxide (Al₂O₃), on a silicon oxide (SiO₂) or on an aluminosilicate support, comprises the palladium, with respect to the total weight of the catalyst, in an amount of from 0.2 to 0.8% by weight, preferably from 0.2 to 0.7% by weight, in particular from 0.2 to 0.6% by weight, more preferably from 0.25 to 0.55% by weight, and most preferably of about 0.3% or about 0.5% by weight. If, for example, the size of the catalyst support is smaller than 2 mm, e.g. a particle size of about 1 mm, then the palladium may be also present in an amount of particular from 0.3 to 0.7% by weight or any other value or sub-range given above for such catalyst supports with a particle size of smaller than 2 mm, e.g. of about 1 mm. The additional silver may be present in these catalysts in any of the amounts and ranges specified above.

Thus, particular typical catalytic metal components in the hydrogenation catalyst compositions based on palladium on an aluminium oxide (Al₂O₃), a silicon oxide (SiO₂) or an aluminosilicate support according to the present invention include those comprising, and preferably essentially consisting of (the following % by weight always given with respect to the weight of the total catalyst composition as 100%):
- palladium from 0.2 to 0.8% by weight, tin from 0.0005 to 0.0450% by weight, and optionally silver from 0.035 to 0.060% by weight;
- palladium from 0.2 to 0.7% by weight, tin from 0.001 to 0.040% by weight, and optionally silver from 0.035 to 0.060% by weight;
- palladium from 0.2 to 0.6% by weight, tin from 0.005 to 0.0375% by weight, and optionally silver from 0.035 to 0.060% by weight;
- palladium from 0.25 to 0.55% by weight, tin from 0.005 to 0.0375% by weight, and optionally silver from 0.035 to 0.060% by weight;
- palladium from 0.25 to 0.55% by weight, tin from 0.010 to 0.035% by weight, and optionally silver from 0.035 to 0.060% by weight;
- palladium from 0.25 to 0.55% by weight, tin from 0.010 to 0.035% by weight, and optionally silver from 0.035 to 0.055% by weight;
- palladium from 0.25 to 0.55% by weight, tin from 0.010 to 0.035% by weight, and optionally silver from 0.040 to 0.050% by weight;
- palladium from 0.25 to 0.55% by weight, tin from 0.015 to 0.035% by weight, and optionally silver from 0.040 to 0.050% by weight;
- palladium from 0.25 to 0.55% by weight, tin from 0.020 to 0.032% by weight, and optionally silver from 0.040 to 0.050% by weight;
- palladium from 0.25 to 0.45% by weight, tin from 0.020 to 0.032% by weight, and optionally silver from 0.040 to 0.050% by weight;
- palladium from 0.25 to 0.40% by weight, tin from 0.020 to 0.032% by weight, and optionally silver from 0.040 to 0.050% by weight;
- palladium from 0.25 to 0.35% by weight, tin from 0.020 to 0.032% by weight, and optionally silver from 0.040 to 0.050% by weight;
- palladium from 0.3 to 07% by weight, tin from 0.0005 to 0.0450% by weight, and optionally silver from 0.035 to 0.060% by weight;
- palladium from 0.3 to 0.7% by weight, tin from 0.001 to 0.040% by weight, and optionally silver from 0.035 to 0.060% by weight;
- palladium from 0.4 to 0.6% by weight, tin from 0.005 to 0.0375% by weight, and optionally silver from 0.035 to 0.060% by weight;
- palladium from 0.45 to 0.55% by weight, tin from 0.005 to 0.0375% by weight, and optionally silver from 0.035 to 0.060% by weight;
- palladium from 0.45 to 0.55% by weight, tin from 0.010 to 0.035% by weight, and optionally silver from 0.035 to 0.060% by weight;
- palladium from 0.45 to 0.55% by weight, tin from 0.010 to 0.035% by weight, and optionally silver from 0.035 to 0.055% by weight;
- palladium from 0.45 to 0.55% by weight, tin from 0.010 to 0.035% by weight, and optionally silver from 0.040 to 0.050% by weight;
- palladium from 0.45 to 0.55% by weight, tin from 0.015 to 0.035% by weight, and optionally silver from 0.040 to 0.050% by weight;
- palladium from 0.45 to 0.55% by weight, tin from 0.020 to 0.032% by weight, and optionally silver from 0.040 to 0.050% by weight;

Examples of preferred typical hydrogenation catalyst compositions based on palladium on an aluminium oxide (Al₂O₃), a silicon oxide (SiO₂) or an aluminosilicate support according to the present invention comprise, and preferably essentially consist of (in the following % by weight is always given with respect to the weight of the total catalyst composition as 100%): palladium from 0.1 to 0.9% by weight (more precisely 0.10 to 0.90% by weight), an amount of tin in the range of from 0.0005% to 0.045% by weight, and optionally silver in an amount of up to 0.06% by weight, particularly optional silver in an amount of from 0.01 to 0.06% by weight; and in the case that no silver is present, the aluminium oxide (Al₂O₃), silicon oxide (SiO₂) or aluminosilicate support from 99.055 to 99.8995% by weight (more precisely 99.0550 to 99.8995% by weight); or alternatively in the case that silver is present in an amount from 0.01 to 0.06% by weight, the aluminium oxide (Al₂O₃), silicon oxide (SiO₂) or aluminosilicate support from 98.995 to 99.8895% by weight (more precisely 98.9950 to 99.8895% by weight).

In the context of the present invention the term "support" usually denotes a "dehydrated support", since it is known to the skilled person that support materials always may contain some adsorbed water. The given amounts of the metals palladium and silver in % by weight may take the ranges or individual amounts as stated above for each of the metals, and any combination thereof, whereby the amount of the aluminium oxide (Al₂O₃), silicon oxide (SiO₂) or aluminosilicate support, optionally together with further non-metallic additives, is summing up to 100 % by weight catalyst composition.

Thus, further examples of typical hydrogenation catalyst compositions based on palladium on an aluminium oxide (Al₂O₃), a silicon oxide (SiO₂) or an aluminosilicate support according to the present invention include those comprising, and preferably essentially consisting of (the % by weight always given with respect to the weight of the total catalyst composition as 100 %), in the case that no silver is present:
- palladium from 0.2 to 0.8% by weight, tin from 0.0005 to 0.0450% by weight, and the aluminium oxide (Al₂O₃), silicon oxide (SiO₂) or aluminosilicate support from 99.7995 to 99.155% by weight (more precisely 98. 99.7995 to 99.1550% by weight);
- palladium from 0.2 to 0.7% by weight, tin from 0.001 to 0.040% by weight, and the aluminium oxide (Al₂O₃), silicon oxide (SiO₂) or aluminosilicate support from 99.799 to 99.26% by weight (more precisely 99.7990 to 99.2600% by weight);
- palladium from 0.2 to 0.6% by weight, tin from 0.005 to 0.0375% by weight, and the aluminium oxide (Al₂O₃), silicon oxide (SiO₂) or aluminosilicate support from 99.795 to 99.3625% by weight (more precisely 99.7950 to 99.3625% by weight);
- palladium from 0.25 to 0.55% by weight, tin from 0.005 to 0.0375% by weight, and the aluminium oxide (Al₂O₃), silicon oxide (SiO₂) or aluminosilicate support from 99.745 to 99.4125% by weight (more precisely 99.7450 to 99.4125% by weight);
- palladium from 0.25 to 0.55% by weight, tin from 0.010 to 0.035% by weight, and the aluminium oxide (Al₂O₃), silicon oxide (SiO₂) or aluminosilicate support from 99.74 to 99.415% by weight (more precisely 99.7400 to 99.4150% by weight);
- palladium from 0.25 to 0.55% by weight, tin from 0.015 to 0.035% by weight, and the aluminium oxide (Al₂O₃), silicon oxide (SiO₂) or aluminosilicate support from 99.735 to 99.415% by weight (more precisely 99.7350 to 99.4150% by weight);
- palladium from 0.25 to 0.55% by weight, tin from 0.020 to 0.032% by weight, and the aluminium oxide (Al₂O₃), silicon oxide (SiO₂) or aluminosilicate support from 99.73 to 99.418% by weight (more precisely 99.7300 to 99.4180% by weight);
- palladium from 0.25 to 0.45% by weight, tin from 0.020 to 0.032% by weight, and the aluminium oxide (Al₂O₃), silicon oxide (SiO₂) or aluminosilicate support from 99.73 to 99.518% by weight (more precisely 99.7300 to 99.5180% by weight);
- palladium from 0.25 to 0.40% by weight, tin from 0.020 to 0.032% by weight, and the aluminium oxide (Al₂O₃), silicon oxide (SiO₂) or aluminosilicate support from 99.73 to 99.568% by weight (more precisely 99.7300 to 99.5680% by weight);
- palladium from 0.25 to 0.35% by weight, tin from 0.020 to 0.032% by weight, and the aluminium oxide (Al₂O₃), silicon oxide (SiO₂) or aluminosilicate support from 99.73 to 99.618% by weight (more precisely 99.7300 to 99.6180% by weight);
- palladium from 0.3 to 07% by weight, tin from 0.0005 to 0.0450% by weight, and the aluminium oxide (Al₂O₃), silicon oxide (SiO₂) or aluminosilicate support from 99.6995 to 99.255% by weight (more precisely 99.6995 to 99.255% by weight);
- palladium from 0.3 to 0.7% by weight, tin from 0.001 to 0.040% by weight, and the aluminium oxide (Al₂O₃), silicon oxide (SiO₂) or aluminosilicate support from 99.595 to 99.3625% by weight (more precisely 99.5950 to 99.3625% by weight);
- palladium from 0.4 to 0.6% by weight, tin from 0.005 to 0.0375% by weight, and the aluminium oxide (Al₂O₃), silicon oxide (SiO₂) or aluminosilicate support from 98.995 to 99.8895% by weight (more precisely 98.9950 to 99.8895% by weight);
- palladium from 0.45 to 0.55% by weight, tin from 0.005 to 0.0375% by weight, and the aluminium oxide (Al₂O₃), silicon oxide (SiO₂) or aluminosilicate support from 99.545 to 99.4125% by weight (more precisely 99.5450 to 99.4125% by weight);
- palladium from 0.45 to 0.55% by weight, tin from 0.010 to 0.035% by weight, and the aluminium oxide (Al₂O₃), silicon oxide (SiO₂) or aluminosilicate support from 99.54 to 99.415% by weight (more precisely 99.5400 to 99.4150% by weight);
- palladium from 0.45 to 0.55% by weight, tin from 0.015 to 0.035% by weight, and the aluminium oxide (Al₂O₃), silicon oxide (SiO₂) or aluminosilicate support from 99.535 to 99.415% by weight (more precisely 99.5350 to 99.4150% by weight);
- palladium from 0.45 to 0.55% by weight, tin from 0.020 to 0.032% by weight, and the aluminium oxide (Al₂O₃), silicon oxide (SiO₂) or aluminosilicate support from 99.53 to 99.418% by weight (more precisely 99.5300 to 99.4180% by weight).

Alternatively, in the case that silver is present, examples of typical hydrogenation catalyst compositions based on palladium on an aluminium oxide (Al₂O₃), a silicon oxide (SiO₂) or an aluminosilicate support according to the present invention include those comprising, and preferably essentially consisting of (the % by weight always given with respect to the weight of the total catalyst composition as 100 %):
- palladium from 0.2 to 0.8% by weight, tin from 0.0005 to 0.0450% by weight, and optionally silver from 0.035 to 0.060% by weight; the aluminium oxide (Al₂O₃), silicon oxide (SiO₂) or aluminosilicate support from 99.7645 to 99.095% by weight (more precisely 99.7645 to 99.0950% by weight);
- palladium from 0.2 to 0.7% by weight, tin from 0.001 to 0.040% by weight, and optionally silver from 0.035 to 0.060% by weight; the aluminium oxide (Al₂O₃), silicon oxide (SiO₂) or aluminosilicate support from 99.764 to 99.2% by weight (more precisely 99.7640 to 99.2000% by weight);
- palladium from 0.2 to 0.6% by weight, tin from 0.005 to 0.0375% by weight, and optionally silver from 0.035 to 0.060% by weight; the aluminium oxide (Al₂O₃), silicon oxide (SiO₂) or aluminosilicate support from 99.76 to 99.3025% by weight (more precisely 99.7600 to 99.3025% by weight);
- palladium from 0.25 to 0.55% by weight, tin from 0.005 to 0.0375% by weight, and optionally silver from 0.035 to 0.060% by weight; the aluminium oxide (Al₂O₃), silicon oxide (SiO₂) or aluminosilicate support from 99.71 to 99.3525% by weight (more precisely 99.7100 to 99.3525% by weight);
- palladium from 0.25 to 0.55% by weight, tin from 0.010 to 0.035% by weight, and optionally silver from 0.035 to 0.060% by weight; the aluminium oxide (Al₂O₃), silicon oxide (SiO₂) or aluminosilicate support from 99.705 to 99.355% by weight (more precisely 99.7050 to 99.3550% by weight);
- palladium from 0.25 to 0.55% by weight, tin from 0.010 to 0.035% by weight, and optionally silver from 0.035 to 0.055% by weight; the aluminium oxide (Al₂O₃), silicon oxide (SiO₂) or aluminosilicate support from 99.705 to 99.36% by weight (more precisely 99.7050 to 99.3600% by weight);
- palladium from 0.25 to 0.55% by weight, tin from 0.010 to 0.035% by weight, and optionally silver from 0.040 to 0.050% by weight; the aluminium oxide (Al₂O₃), silicon oxide (SiO₂) or aluminosilicate support from 99.7 to 99.635% by weight (more precisely 99.7000 to 99.6350% by weight);
- palladium from 0.25 to 0.55% by weight, tin from 0.015 to 0.035% by weight, and optionally silver from 0.040 to 0.050% by weight; the aluminium oxide (Al₂O₃), silicon oxide (SiO₂) or aluminosilicate support from 99.695 to 99.365% by weight (more precisely 99.6950 to 99.3650% by weight); palladium from 0.25 to 0.55% by weight, tin from 0.020 to 0.032% by weight, and optionally silver from 0.040 to 0.050% by weight; the aluminium oxide (Al₂O₃), silicon oxide (SiO₂) or aluminosilicate support from 99.69 to 99.368% by weight (more precisely 99.6900 to 99.3680% by weight);
- palladium from 0.25 to 0.45% by weight, tin from 0.020 to 0.032% by weight, and optionally silver from 0.040 to 0.050% by weight; the aluminium oxide (Al₂O₃), silicon oxide (SiO₂) or aluminosilicate support from 99.69 to 99.468% by weight (more precisely 99.6900 to 99.4680% by weight);
- palladium from 0.25 to 0.40% by weight, tin from 0.020 to 0.032% by weight, and optionally silver from 0.040 to 0.050% by weight; the aluminium oxide (Al₂O₃), silicon oxide (SiO₂) or aluminosilicate support from 99.69 to 99.518% by weight (more precisely 99.6900 to 99.5180% by weight);
- palladium from 0.25 to 0.35% by weight, tin from 0.020 to 0.032% by weight, and optionally silver from 0.040 to 0.050% by weight; the aluminium oxide (Al₂O₃), silicon oxide (SiO₂) or aluminosilicate support from 99.69 to 99.568% by weight (more precisely 99.6900 to 99.5680% by weight);
- palladium from 0.3 to 07% by weight, tin from 0.0005 to 0.0450% by weight, and optionally silver from 0.035 to 0.060% by weight; the aluminium oxide (Al₂O₃), silicon oxide (SiO₂) or aluminosilicate support from 99.6645 to 99.195% by weight (more precisely 99.6645 to 99.1950% by weight);
- palladium from 0.3 to 0.7% by weight, tin from 0.001 to 0.040% by weight, and optionally silver from 0.035 to 0.060% by weight; the aluminium oxide (Al₂O₃), silicon oxide (SiO₂) or aluminosilicate support from 99.664 to 99.2% by weight (more precisely 9.96640 to 99.2000% by weight);
- palladium from 0.4 to 0.6% by weight, tin from 0.005 to 0.0375% by weight, and optionally silver from 0.035 to 0.060% by weight; the aluminium oxide (Al₂O₃), silicon oxide (SiO₂) or aluminosilicate support from 99.56 to 99.3025% by weight (more precisely 99.5600 to 99.3025% by weight);
- palladium from 0.45 to 0.55% by weight, tin from 0.005 to 0.0375% by weight, and optionally silver from 0.035 to 0.060% by weight; the aluminium oxide (Al₂O₃), silicon oxide (SiO₂) or aluminosilicate support from from 99.51 to 99.3525% by weight (more precisely 99.5100 to 99.3525% by weight);
- palladium from 0.45 to 0.55% by weight, tin from 0.010 to 0.035% by weight, and optionally silver from 0.035 to 0.060% by weight; the aluminium oxide (Al₂O₃), silicon oxide (SiO₂) or aluminosilicate support from 99.505 to 99.355% by weight (more precisely 99.5050 to 99.3550% by weight);
- palladium from 0.45 to 0.55% by weight, tin from 0.010 to 0.035% by weight, and optionally silver from 0.035 to 0.055% by weight; the aluminium oxide (Al₂O₃), silicon oxide (SiO₂) or aluminosilicate support from 99.505 to 99.36% by weight (more precisely 99.5050 to 99.3600% by weight);
- palladium from 0.45 to 0.55% by weight, tin from 0.010 to 0.035% by weight, and optionally silver from 0.040 to 0.050% by weight; the aluminium oxide (Al₂O₃), silicon oxide (SiO₂) or aluminosilicate support from 99.5 to 99.365% by weight (more precisely 99.5000 to 99.3650% by weight);
- palladium from 0.45 to 0.55% by weight, tin from 0.015 to 0.035% by weight, and optionally silver from 0.040 to 0.050% by weight; the aluminium oxide (Al₂O₃), silicon oxide (SiO₂) or aluminosilicate support from 99.495 to 99.365% by weight (more precisely 99.4950 to 99.3650% by weight);
- palladium from 0.45 to 0.55% by weight, tin from 0.020 to 0.032% by weight, and optionally silver from 0.040 to 0.050% by weight; the aluminium oxide (Al₂O₃), silicon oxide (SiO₂) or aluminosilicate support from 99.49 to 99.368% by weight (more precisely 99.4900 to 99.3680% by weight).

In a particular embodiment, in the case that no silver is present, and in particular in case of 2 - 4 mm catalyst beads, the hydrogenation catalyst compositions based on palladium on an aluminium oxide (Al₂O₃), a silicon oxide (SiO₂) or an aluminosilicate support according to the present invention include those comprising, and preferably essentially consisting of (the % by weight always given with respect to the weight of the total catalyst composition as 100 %): palladium in an amount of about 0.3% by weight (more precisely about 0.300% by weight), tin in an amount of about 0.03% by weight (more precisely about 0.030% by weight), and the aluminium oxide (Al₂O₃), silicon oxide (SiO₂) or aluminosilicate support, most preferably an aluminium oxide (Al₂O₃) support, in an amount of about 99.67% by weight (more precisely about 99.670% by weight). The meaning of the term "about" is that the amount of palladium,tin and silver in the (fresh) catalyst may somewhat vary around the given values as indicated above for each of the metals. Consequently, this preferred hydrogenation catalyst based on palladium on an aluminium oxide (Al₂O₃), a silicon oxide (SiO₂) or an aluminosilicate support, preferably on an aluminium oxide (Al₂O₃) support, according to the present invention comprises, and preferably essentially consists of: palladium in an amount of 0.3% (0.30%) +/-0.01% by weight, preferably in an amount of 0.3% (0.30%) +/- 0.005% by weight, with respect to the weight of the catalyst; tin in an amount of 0.03% (0.030%) +/- 0.001% by weight, preferably in an amount of 0.03% (0.0300%) +/- 0.0005% by weight, with respect to the weight of the catalyst; and the aluminium oxide (Al₂O₃), the silicon oxide (SiO₂) or the aluminosilicate support, preferably the aluminium oxide (Al₂O₃) support, in an amount to add up to 100% by weight for the total catalyst composition. For example, in case of Pd varying by +/- 0.01% (preferably by +/- 0.005%) and Sn by +/- 0.001% (preferably by +/- 0.0005%), then the support is accounting for 99.67% (99.670%) +/- 0.011% (preferably +/- 0.0055%) by weight with respect to the weight of the total catalyst composition.

In another particular embodiment, in the case that silver is present, and in particular in case of about 1 mm catalyst beads, the hydrogenation catalyst compositions based on palladium on an aluminium oxide (Al₂O₃), a silicon oxide (SiO₂) or an aluminosilicate support according to the present invention include those comprising, and preferably essentially consisting of (the % by weight always given with respect to the weight of the total catalyst composition as 100 %): palladium in an amount of 0.5% by weight (more precisely 0.500% by weight), tin in an amount of 0.03% by weight (more precisely 0.030% by weight), silver in an amount of 0.045% by weight (more precisely 0.045% by weight), and the aluminium oxide (Al₂O₃), silicon oxide (SiO₂) or aluminosilicate support, most preferably an aluminium oxide (Al₂O₃) support, in an amount of 99.425% by weight (more precisely 99.425% by weight). This embodiment shows that if the particle size is lower than 2 mm, e.g. in the range of 0.5 to 1.5 or in particular about 1 mm as in the before exemplified catalyst composition, it may be useful to increase the amount of the catalytic metal palladium (Pd) to some degree as compared to particle sizes in the range of e.g. 2 - 4 mm, e.g. to increase the amount of Pd by up to 0.2% by weight in said catalyst compositions with particle size of lower than 2 mm. The meaning of the term "about" is that the amount of palladium, tin and silver in the (fresh) catalyst may somewhat vary around the given values as indicated above for each of the metals. Consequently, this preferred hydrogenation catalyst based on palladium on an aluminium oxide (Al₂O₃), a silicon oxide (SiO₂) or an aluminosilicate support, preferably on an aluminium oxide (Al₂O₃) support, according to the present invention comprises, and preferably essentially consists of: palladium in an amount of 0.3% (0.30%) +/- 0.01% by weight, preferably in an amount of 0.3% (0.30%) +/- 0.005% by weight, with respect to the weight of the catalyst; tin in an amount of 0.03% (0.030%) +/- 0.001% by weight, preferably in an amount of 0.03% (0.030%) +/- 0.0005% by weight, with respect to the weight of the catalyst; silver in an amount of 0.045% (0.0450%) +/- 0.001% by weight, preferably in an amount of 0.045% (0.0450%) +/- 0.0005% by weight, with respect to the weight of the catalyst; and the an aluminium oxide (Al₂O₃), the silicon oxide (SiO₂) or the aluminosilicate support, preferably the aluminium oxide (Al₂O₃) support, in an amount to add up to 100% by weight for the total catalyst composition. For example, in case of Pd varying by +/- 0.01% (preferably by +/- 0.005%), tin by +/- 0.001% (preferably by +/- 0.0005%) and Ag by +/- 0.001% (preferably by +/- 0.0005%), then the support is accounting for 99.425% (99.4250%) +/- 0.012% (preferably +/- 0.0060%) by weight with respect to the weight of the total catalyst composition.

The hydrogenation catalyst compositions according to the invention may also be expressed in g of the metal component per kg of the hydrogenation catalyst. The ordinary skilled person easily can compute such compositions indicated by the absolute weight from the relative percentages (%) by weight as described above. For example, an amount of the metal component of 0.1% by weight corresponds to 1 g metal. Thus, any of the above given values in % by weight can be converted into a corresponding absolute weight indicated as g or kg value.

If expressed in g per kg catalyst, typically, the catalytic metal component in the hydrogenation catalysts based on palladium on an aluminium oxide (Al₂O₃), a silicon oxide (SiO₂) or an aluminosilicate support according to the present invention comprises, and preferably essentially consists of, (in the following g weight is always given with respect to 1 kg of the total catalyst composition) per kg of catalyst: from 1 to 9 g (more precisely 1.0 to 9.0 g) of palladium; and tin from 0.005 to 0.450 g (more precisely 0.005 to 0.450 g), preferably from 0.01 to 0.40 g (more precisely 0.010 to 0.400 g), more preferably from 0.05 to 0.375 g (more precisely 0.050 to 0.375 g), in particular from 0.10 to 0.35 g (more precisely 0.100 to 0.350 g), even more preferably from 0.15 to 0.35 g (more precisely 0.150 to 0.350 g), in particular from 0.20 to 0.32 g (more precisely 0.200 to 0.320 g), and most preferably of about 0.30 g (more precisely 0.300 g); and wherein optionally the catalyst further comprises silver in an amount of up to 0.60 g (more precisely 0.600 g), particularly silver in an amount of 0.1 to 0.60 g (more precisely 0.100 to 0.600 g); and the aluminium oxide (Al₂O₃), silicon oxide (SiO₂) or aluminosilicate support adding up to 1 kg of the catalyst.

Whenever used throughout this description of the invention herein before or herein after, the term "essential" means that minor variations or modifications may be envisaged by the ordinary skilled person based on his common technical knowledge.

The given amounts of the metals palladium, tin and the optional silver in g weight for the catalytic metal component may take the corresponding ranges or individual amounts as stated above for each of said two metals or any combination thereof in % by weight. Thus, particular typical catalytic metal components in the hydrogenation catalyst compositions based on palladium on an aluminium oxide (Al₂O₃), a silicon oxide (SiO₂) or an aluminosilicate support according to the present invention include those comprising, and preferably essentially consisting of, (the following g weight always given with respect to 1 kg of the total catalyst composition) per kg of catalyst: palladium in an amount of from 2 to 8 g (more precisely 2.0 to 8.0 g), preferably from 2 to 7 g (more precisely 2.0 to 7.0 g), in particular from 2 to 6 g (more precisely 2.0 to 6.0 g), more preferably from 2.5 to 5.5 g (more precisely 2.50 to 5.50 g), and most preferably of about 3 g (more precisely 3.0 g) or of about 5 g (more precisely 5.0 g).

The amount of silver present in the described catalyst compositions may be in particular embodiments up to 0.6 g, preferably p to 0.55 g, more preferably up to 0.50 g. If silver is present, the minimum amount of silver in the described catalyst compositions may be in particular embodiments at least 0.1 g, particularly at least 0.15 g, preferably at least 0.2 g, more preferred at least 0.25 g or 0.30 g, even more preferred at least 0.35 g or 0.40 g. Thus, the amount of silver present in the described catalyst compositions in particular embodiments may range of from 0.1 to 0.6 g (more precisely 0.10 to 0.60 g), particularly of from 0.15 to 0.60 g (more precisely 0.150 to 0.600 g), preferably of from 0.20 to 0.60 g (more precisely 0.200 to 0.600 g), more preferred of from 0.25 to 0.60 g (more precisely 0.250 to 0.600 g) or 0.30 to 0.60 g (more precisely 0.300 to 0.600 g), even more preferred of from 0.35 to 0.55 g (more precisely 0.350 to 0.550 g) or 0.40 to 0.50 g (more precisely 0.400 to 0.500 g).

As indicated above, the ordinary skilled person easily can compute further amounts of silver as absolute weight from the relative percentages (%) by weight as described above for palladium, tin and the optional silver in the catalyst compositions of the present invention. Thus, if wished to be expressed in g per kg catalyst, each and every example of the general and preferred typical hydrogenation catalyst compositions as given above in % by weight values for the hydrogenation catalyst compositions based on palladium on an aluminium oxide (Al₂O₃), a silicon oxide (SiO₂) or an aluminosilicate support according to the present invention can be converted by simple calculation to result in hydrogenation catalyst compositions comprising, and preferably essentially consisting of the respective amounts of palladium, tin and the optional silver, and the respective amounts of the aluminium oxide (Al₂O₃), the silicon oxide (SiO₂) or the aluminosilicate support, defined as g weight with respect to 1 kg of the total catalyst composition, that is to say as amount in g per kg of catalyst.

In one most preferred hydrogenation catalyst based on palladium on an aluminium oxide (Al₂O₃), a silicon oxide (SiO₂) or an aluminosilicate support according to the present invention the catalytic metal component comprises, and preferably essentially consists of: palladium of about 0.3% (0.30%) by weight or 0.5% (0.50%) by weight with respect to the weight of the catalyst, tin in an amount of 0.03% (0.030%) by weight and optionally silver of about 0.045% (0.0450%) by weight with respect to the weight of the total catalyst composition; whereby the amount of the silicon oxide (SiO₂), aluminium oxide (Al₂O₃) or aluminosilicate support, optionally together with further non-metallic additives, is summing up to 100 % by weight of the total catalyst composition.

In the context of the present invention the term "support" usually denotes a "dehydrated support", since it is known to the skilled person that support materials always may contain some adsorbed water. The meaning of the term "about" is that the amount of palladium, tin and the optional silver in the (fresh) catalyst may somewhat vary around the given values as indicated above for each of the metals. Consequently, the most preferred hydrogenation catalyst based on palladium on a silicon oxide (SiO₂), an aluminium oxide (Al₂O₃) or an aluminosilicate support according to the present invention comprises, and preferably essentially consists of: palladium in an amount of 0.3% (0.30%) +/-0.01% by weight or 0.5% (0.50%) +/- 0.01% by weight, preferably in an amount of 0.3% (0.30%) +/- 0.005% by weight or 0.5% (0.50%) +/- 0.005% by weight, with respect to the weight of the catalyst; tin in an amount of 0.03% (0.030%) +/-0.001% by weight, preferably in an amount of 0.03% (0.030%) +/- 0.0005% by weight, with respect to the weight of the catalyst; and if optionally silver is present in the catalyst composition, silver in an amount of 0.045% (0.0450%) +/-0.001% by weight, preferably in an amount of 0.045% (0.0450%) +/- 0.0005% by weight, with respect to the weight of the catalyst; and the aluminium oxide (Al₂O₃), the silicon oxide (SiO₂) or the aluminosilicate support in an amount to add up to 100% by weight for the total catalyst composition. For example, if no silver is present and in case of a Pd load of 0.3% (0.30%) +/- 0.01% by weight varying by +/- 0.01% (preferably by +/- 0.005%), and a tin (Sn) load of 0.03% (0.030%) +/- 0.001 % by weight varying by +/- 0.001 % (preferably by +/-0.0005%), then the support is accounting for 99.670% (99.6700%) +/- 0.011% (preferably +/- 0.0055%) by weight with respect to the weight of the total catalyst composition. Alternatively, if the optional silver (Ag) is present in an amount of 0.045% (0.0450%) and varying by +/- 0.001% by weight, preferably varying by +/- 0.0005% by weight, with respect to the weight of the catalyst, the palladium (Pd) load of 0.3% (0.30%) by weight is varying by +/- 0.01% (preferably by +/- 0.005%), and the tin (Sn) load of 0.03% (0.030%) by weight is varying by +/- 0.001 % (preferably by +/- 0.0005%), then the support is accounting for 99.625% (99.6250%) by weight +/- 0.012% (preferably +/-0.060%) by weight, with respect to the weight of the catalyst.

If expressed in g per kg catalyst, the meaning of the term "about" is the same as indicated above for the amounts given in % by weight, that is to say that the g amount of palladium and silver in the (fresh) catalyst may somewhat vary around the given g values, analogously as indicated above for each of the metals for the % by weight values. For example, a most preferred hydrogenation catalyst based on palladium on a silicon oxide (SiO₂), an aluminium oxide (Al₂O₃) or an aluminosilicate support according to the present invention has catalytic metal component comprising, and preferably essentially consisting of: 3 g (3.0 g) +/- 0.1 g or 5 g (5.0 g) +/- 0.1 g palladium per kg of catalyst, preferably 3 g (3.0 g) +/- 0.05 g or 5 g (5.0 g) +/- 0.05 g of palladium per kg of catalyst; 0.3 g (0.30 g) +/- 0.01 g of tin per kg of catalyst, preferably 0.3 g (0.30 g) +/- 0.005 g of silver per kg of catalyst; and if optionally silver is present in the catalyst composition, 0.45 g (0.450 g) +/- 0.01 g of silver per kg of catalyst, preferably 0.45 g (0.450 g) +/- 0.005 g of silver per kg of catalyst; and the silicon oxide (SiO₂), an aluminium oxide (Al₂O₃) or an aluminosilicate support, optionally together with further non-metallic additives, in an amount to add up to 1 kg for the total catalyst composition. For example, in case of a Pd load of 3 g varying by +/- 0.1 g (preferably by +/- 0.05 g), tin in an amount of 0.3 g varying by +/-0.01 g (preferably by +/- 0.005 g), and in case no silver (Ag) is present, then the support is accounting for 996.70 g (996.700 g) +/- 0.11 g (preferably +/- 0.055 g) per 1 kg of the total catalyst composition. Alternatively, if the optional silver (Ag) is present in an amount of 0.45 g and varying by +/- 0.01 g (preferably by +/- 0.005 g), palladium (Pd) is varying by +/- 0.1 g (preferably by +/- 0.05 g) and tin is varying by +/- 0.01 g (preferably by +/- 0.005 g), then the support is accounting for 996.25 g (996.250 g) +/- 0.12 g (preferably +/- 0.060 g) per 1 kg of the total catalyst composition.

In the catalysts according to the invention as described above, palladium, the tin and/or the optional silver can be in the elemental state or in the form of a compound, such as a salt or an oxide. The catalysts preferably comprise or consist only of palladium and tin, with as an additional optional silver as an additional optional component, as the catalytic metal components, but they do not comprise other catalytic metal components such as gold.

The support of the catalysts according to the invention is an aluminium oxide (Al₂O₃), a silicon oxide (SiO₂) or an aluminosilicate. In a variant the hydrogenation catalyst support in the present invention is silicon oxide (SiO₂). In another variant the hydrogenation catalyst support in the present invention is silicon oxide (SiO₂) comprising aluminium oxide (Al₂O₃, extra-framework aluminium) and/or intra-framework aluminium. Typically in the art gamma-aluminium oxide (gamma-Al₂O₃) or delta-alumina (delta-Al₂O₃) or a mixture of both gamma and delta alumina is used as a catalyst support. Thus, the aluminium oxide (Al₂O₃) comprised in the silicon oxide (SiO₂) may be such gamma-aluminium oxide (gamma-Al₂O₃), delta alumina (delta-Al₂O₃) or a mixture of both delta and gamma alumina.

In preferred variant the hydrogenation catalyst support in the present invention is aluminium oxide (Al₂O₃). As mentioned in the art typically gamma-aluminium oxide (gamma-Al₂O₃) or delta-alumina (delta-Al₂O₃) or a mixture of both gamma and delta alumina are used as a catalyst support. Thus, the aluminium oxide (Al₂O₃) support may be a gamma-aluminium oxide (gamma-Al₂O₃) or delta-alumina (delta-Al₂O₃) or a mixture of both gamma and delta alumina.

The catalyst support in the present invention, e.g. the preferred aluminium oxide, or alternatively the silicon oxide (SiO₂) or the silicon oxide (SiO₂) comprising aluminium oxide (Al₂O₃, extra-framework aluminium) and/or intra-framework aluminium, or, can be in a crystalline, partially crystalline, amorphous or partially amorphous form. The catalyst support is advantageously amorphous. If the catalyst support is a composition of silicon oxide (SiO₂) and aluminium oxide (Al₂O₃), then preferably it exhibits a homogeneous distribution between the silicon oxide (SiO₂) and the aluminium oxide (Al₂O₃), resulting into an aluminosilicate support. The skilled person knows how to provide the required support materials as this is well established in the art.

The term "homogeneous distribution between the silicon oxide (SiO₂) and aluminium oxide (Al₂O₃)" is understood to mean a distribution such that the aluminium is atomically dispersed into the whole silica framework (intra-framework aluminium species) in such extent that first; the Nuclear Magnetic Resonance of the aluminium, spinning at the magical angle (²⁷Al MAS-NMR), provides one major signal located between 45 to 70 ppm, attributed to tetrahedral intra-framework aluminium species. Preferably, a single signal located between 45 to 70 ppm should be obtained. Secondly, the experimental Si/Al ratio, measured by X-ray photoelectron spectroscopy (XPS), does not differ by more than 20% from the theoretical Si/A1 ratio drawn up by calculation on the basis of the chemical composition of the support. The supports in which the difference between the experimental Si/Al ratio, measured by XPS, and the theoretical Si/Al ratio does not exceed 10% are very particularly preferred.

The size of the catalyst support is not critical to the practice of the invention but may be important in the subsequent use of the catalyst. According to a particular embodiment of the invention the hydrogenation catalyst based on palladium on an aluminium oxide (Al₂O₃), on a silicon oxide (SiO₂) or on an aluminosilicate support, the catalyst has a particle size in the range of from 0.2 to 5 mm, preferably 0.5 to 4 mm, more preferably 1 to 4 mm, most preferably 2 to 4 mm. Particularly in fixed bed reactors, a suitable support size would generally be about 1.0 to 5.0 mm, preferably about 2.0 to 4.0 mm, and most preferably about 2.5 to 3.0 mm in diameter. The support morphology may vary and can be described e.g. as irregular particles, trilobes, and more preferably as spherical or cylindrical shapes. The given particle size for fixed bed reactions generally have the meaning of mean particle diameter. The meaning of the term "about" is that the particle size of the (fresh) catalyst may somewhat vary around the given values by e.g. up to +/- 0.02 mm, preferably up to +/- 0.01 mm. Thus, for example, in a catalyst of the present invention the particle size of the catalyst can be 1.0 to 5.0 mm +/- 0.02 mm (preferably 1.0 to 5.0 mm +/- 0.01 mm), preferably 2.0 to 4.0 mm +/- 0.02 mm (preferably 2.0 to 4.0 mm +/- 0.01 mm), and most preferably about 2.5 to 3.0 mm +/- 0.02 mm (preferably 2.5 to 3.0 mm +/-0.01 mm).

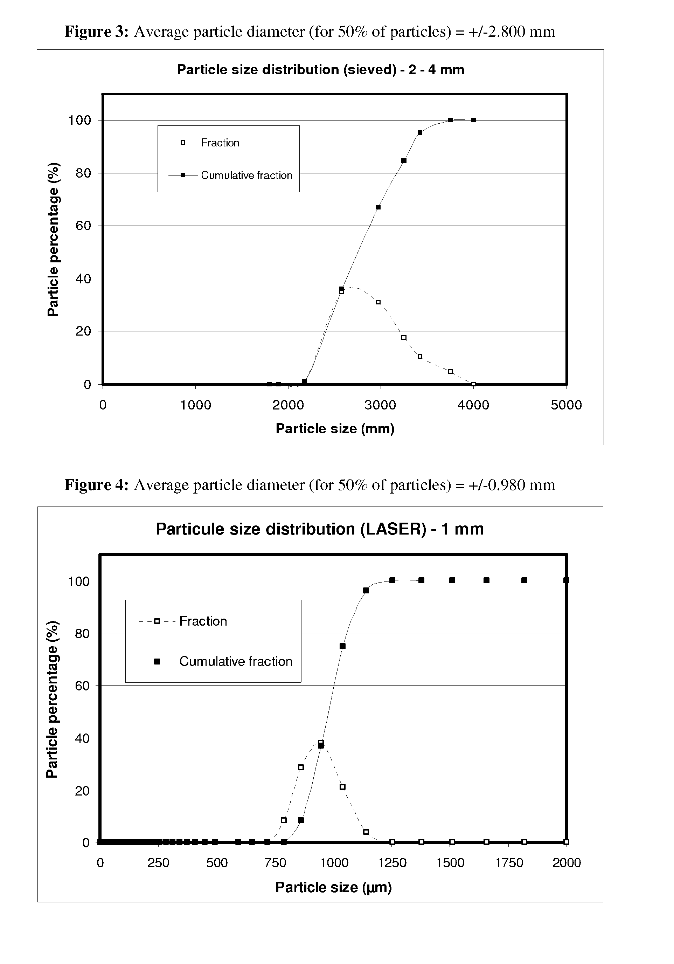

The particle size of the catalyst and/or support in the context of the present invention can be determined by methods well known by the ordinary skilled person, for example by sieving or determination by laser. However, an example method for determining the particle size is described in the Examples, which method and results are further elucidated by Table IV and V and the Figures 3 and 4 for a particle size of 2 to 4 mm or of about 1 mm, respectively. Preferably, the standard particle size distribution for a fixed bed type catalyst is adjusted such that, in % by weight, at least 90%, preferably at least 95%, of the particles are ranging from 2.0 to 4.0 mm, more preferably at least 95% of the particles are in a fraction from 2.0 to 3.5 mm, and most preferably at least 99% of the particles are in a fraction from 2.5 to 3.5 mm.

The above mentioned metallic composition ranges for the catalysts of the present invention, e.g. any possible option and preferred variant regarding ranges or amounts of the catalytic metals palladium and silver, individually, are very suitable for embodiments hydrogenation catalysts, in particular in the hydrogenation of an hydrogen peroxide manufacturing process by the AO-process, particularly as fixed-bed catalysts, especially if used with any of the above mentioned particle size.

In some alternative embodiments of the present invention the size of the catalyst support may be suitable in the subsequent use of the catalyst, also if the particle size is below 2 mm, Such a suitable support size would generally be about 0.5 to about 1.5 mm, preferably in this alternative the size may be about 1.0 mm. The given particle size generally has the meaning of mean particle diameter. The meaning of the term "about" is that the particle size of the (fresh) catalyst may somewhat vary around the given values by e.g. up to +/- 0.02 mm, preferably up to +/- 0.01 mm. Thus, for example, in a catalyst of the present invention the particle size of the catalyst can be 0.5 to 1.5 mm +/- 0.02 mm (preferably 0.5 to 1.5 mm +/- 0.01 mm), more preferably 1.0 mm +/- 0.02 mm, and most preferably 1.0 mm +/- 0.01 mm.

The hydrogenation catalysts according to the present invention provide several advantages.

In a first aspect an advantageous high selectivity catalyst of combined catalytic metals Pd+Sn+ optionally Ag on Al₂O₃ is provided which is particularly suitable for the production of hydrogen peroxide by the AO-processes. The catalyst may be well employed in large-to-mega scale AO-processes, but preferably is suitable for small-to-medium scale, in particular for mini-AO scale processes. Typically, a small-to-medium scale AO-process (mini-AO process) is run with a capacity of up to 20 ktpa, preferably with a capacity of up to 10 ktpa, (as 100 %) hydrogen peroxide production, and most preferably 2 to 10 ktpa (as 100 %) hydrogen peroxide production. Laboratory trials have been carries out. Preferred operating conditions of the hydrogenator (lowest degradation) have been identified in the case of fixed bed operation and slurry hydrogenators which both may be industrially operated with the catalyst according to the invention.

In the AO-process the new catalyst with the metal-catalytic component of Pd, Sn and optionally Ag on Al₂O₃ - with an example for a best composition: 0.3% Pd + 0.03% Sn + optionally 0.045% Ag on Al₂O₃ (particle size about 2 - 4 mm) allows achieving high selectivity in terms of anthraquinone derivative degradation (typically, ethyl or amyl anthraquinone are used; for the sake of clarity, anthraquinone in the following text states for alkyl anthraquinone derivative), e.g. that is to say, lower anthrone and tetrahydroanthraquinone levels. This implies lower need for regeneration of the working solution and lower anthraquinone consumption and is directly beneficial for the economy of the process. Long term stability of the catalyst with Pd, Sn and optionally Ag on Al₂O₃ is favorable.

As described before, the hydrogenation catalyst based on palladium according to the present invention comprise the catalytic metal or combination of catalytic metals as defined above on an aluminium oxide (Al₂O₃) support. According to the invention the catalyst based on palladium may be also on a silicon oxide (SiO₂) support or on a silicon oxide (SiO₂) support which may additionally comprise aluminium oxide (Al₂O₃) and/or intra-framework aluminium. In the context of the present invention the term "support" usually denotes a "dehydrated support", since it is known to the skilled person that support materials always may contain some adsorbed water. Thus, in an embodiment of the invention, the support can be silicon oxide (SiO₂), optionally comprising aluminium oxide (Al₂O₃), e.g. such as a gamma-aluminium oxide (gamma-Al₂O₃), preferably a delta-aluminium oxide (delta-Al₂O₃) or a mixture of both gamma- and delta-aluminium oxide, and/or intra-framework aluminium species in an amount ranging from 1 to 99% Al₂O₃ by weight, and preferably in an amount ranging from 15 to 25% Al₂O₃ by weight. Most preferably in the invention the support is an aluminium oxide (Al₂O₃) support.

In a very preferred embodiment of the invention, the support is an aluminium oxide (Al₂O₃) such as a gamma-aluminium oxide (gamma-Al₂O₃), preferably a delta-aluminium oxide (delta-Al₂O₃) or a mixture of both gamma- and delta-aluminium oxide.

The before explained advantages of the hydrogenation catalysts may be further enhanced when using a theta-aluminium oxide (theta-Al₂O₃), delta-aluminium oxide (delta-Al₂O₃), a gamma-aluminium oxide (gamma-Al₂O₃), a mixture of both delta and gamma phases, a mixture of both theta and delta phases and an alpha-aluminium oxide (alpha-Al₂O₃) as a component of the catalyst support. Therefore, in another embodiment the invention relates to hydrogenation catalysts that comprise delta-aluminium oxide (delta-Al₂O₃), a theta-aluminium oxide (theta-Al₂O₃), a gamma-aluminium oxide (gamma-Al₂O₃), a mixture of both delta and gamma phases, a mixture of both theta and delta phases or an alpha-aluminium oxide (alpha-Al₂O₃) as a component of the catalyst support. The theta-aluminium oxide (theta-Al₂O₃), the gamma-aluminium oxide (gamma-Al₂O₃), the mixture of both delta and gamma phases or the mixture of both theta and delta phases can be added as a component to a, e.g. conventional, silicon oxide (SiO₂) support in an amount ranging from 1 to 99% Al₂O₃ by weight, and preferably 15 to 25% Al₂O₃ by weight. In a particular embodiment the invention relates to hydrogenation catalysts that comprise delta-aluminium oxide (delta-Al₂O₃) as a component of the catalyst support, wherein for example delta phases can be added as a component to a, e.g. conventional, silicon oxide (SiO₂) support in an amount ranging from 1 to 99% delta-Al₂O₃ by weight, and preferably 15 to 25% delta-Al₂O₃ by weight.

In another variant of this embodiment of the invention the hydrogenation catalyst based on palladium on an aluminosilicate support resulting from the homogeneous distribution between the silicon oxide (SiO₂) and the aluminium oxide (Al₂O₃).

In a preferred variant of this embodiment of the invention the hydrogenation catalyst based on palladium on an aluminium oxide (Al₂O₃) or an aluminosilicate support is a catalyst, wherein the support particularly is aluminium oxide (Al₂O₃), most preferably a delta-aluminium oxide (delta-Al₂O₃).

Particularly, the hydrogenation catalyst according to the invention is a catalyst based on palladium, tin and optional silver deposited on an aluminium oxide (Al₂O₃), a silicon oxide (SiO₂) or an aluminosilicate support, and the hydrogenation catalyst is preferably an eggshell dispersion of Pd on the catalyst support, that is to say that Pd is dispersed in the outer layer of the support particle, with no internal diffusion.

The hydrogenation catalysts according to the present invention comprising an aluminium oxide (Al₂O₃), a silicon oxide (SiO₂) or an aluminosilicate as support provide several advantages. In one aspect of the invention an advantageous high selectivity catalyst comprising or having an Al₂O₃ (a beneficial support regarding selectivity) is provided. The new catalyst comprising Pd, Sn and optionally Ag supported on Al₂O₃, particularly on delta-Al₂O₃, as described above or supported on SiO₂ in the alternative embodiment of the invention allows achieving much higher selectivity in terms of anthraquinone derivative degradation. Furthermore, for example, hydrogenation catalysts of the present invention, wherein the Pd is deposited on a support comprising delta-Al₂O₃ has several further advantages: low Pd leaching, which is significantly improved even over Pd catalysts supported only on SiO₂, low Pd sintering and a higher activity.

A particular advantage of hydrogenation catalysts according to the present invention which comprise alumina in the support (with Pd and Sn) is its ability first, to further reduce ATEQ (amyl tetrahydro epoxy anthraquinone) to ATHQ (amyl tetrahydro hydroxyl anthraquinone) and secondly, to dehydrate ATHQ to ATQ (amyl tetrahydro anthraquinone), which could be considered as a part of a reversion process. This is an additional benefit of the invention when using Pd as catalyst supported (in addition) on Al₂O₃ compared to Pd + Sn on only SiO₂. Therefore, the presence of Al₂O₃ as support allows for auxiliary solid state reversion, because Al₂O₃ is typically used as solid state reversion agent in the AO-process for the manufacture of H₂O₂.

The binary or ternary catalysts according to the invention are generally prepared depositing the catalytic metals, e.g. in the context of this invention the palladium (Pd), the tin (Sn) and the silver (Ag), by simultaneous or subsequent impregnation and/or precipitation of different metals, for example, first depositing the Pd, then Sn and optionally thereafter Ag.

The invention also is directed to a process for the manufacture of hydrogenation catalysts according to the invention, as described above, based on palladium on an aluminium oxide (Al₂O₃), a silicon oxide (SiO₂) or an aluminosilicate support, wherein the catalyst comprises palladium, tin and optionally further silver, the process comprising simultaneously or successively impregnating and/or precipitating the required amount by weight with respect to the total weight of the catalyst of palladium, tin and optionally further silver on the aluminium oxide (Al₂O₃), the silicon oxide (SiO₂) or on an aluminosilicate support. Thus, a catalyst is prepared which comprises an amount of palladium in % by weight with respect to the weight of the catalyst, an amount of tin in % by weight with respect to the weight of the catalyst, and optionally an amount of silver in % by weight with respect to the weight of the catalyst on an aluminium oxide (Al₂O₃), a silicon oxide (SiO₂) or an aluminosilicate support.

The hydrogenation catalysts based on palladium on an aluminium oxide (Al₂O₃), a silicon oxide (SiO₂) or an aluminosilicate support according to the present invention can be prepared by the usual techniques, such as, for example by co-impregnation of the metals on the support, by co-precipitation of the metals on the support or by simultaneous or successive depositions of the metals on the support, for example, by impregnation and/or precipitation. The catalysts according to the invention can be prepared by simultaneous or successive depositions of the metals palladium and tin, and optionally silver, simultaneously or in any order on an aluminium oxide (Al₂O₃), on a silicon oxide (SiO₂) or on an aluminosilicate support by impregnation and/or precipitation.

Advantageously, the catalysts according to the invention are prepared by simultaneous depositions of the metals palladium and tin on an aluminium oxide (Al₂O₃), on a silicon oxide (SiO₂) or on an aluminosilicate support by impregnation and/or precipitation, preferably by precipitation, followed by the , optional silver deposition by impregnation and/or precipitation.

Preferably, the support is first impregnated with the palladium and tin, then silver. The support can be impregnated using organic or inorganic solutions comprising respectively an organic or an inorganic precursor of the metal constituents of the catalyst. The impregnation solutions are preferably aqueous inorganic solutions of metallic salts and more preferably ethanolic inorganic solutions of palladium and tin salts. The salts used to this end are in particular chlorides, nitrates, acetates or ammoniacal complexes, more preferably chlorides.

The tin is preferably deposited by impregnation of a Pd.Ag/SiO₂, a Pd.Ag/SiO₂/Al₂O₃ or a Pd.Ag/Al₂O₃ catalyst, more preferably a Pd/SiO₂, a Pd/SiO₂/Al₂O₃ or a Pd/Al₂O₃ catalyst, with a solution comprising the tin constituent under a reducing atmosphere, such as, for example, a hydrogen atmosphere. The deposition of the tin by reduction with hydrogen or by any other form of reduction also results in the further reduction of the palladium. The catalysts can subsequently be filtered off, washed and dried. Thus, the Pd.Sn/SiO₂, the Pd.Sn/SiO₂/Al₂O₃ or the Pd.Sn/Al₂O₃ catalysts can be prepared by suspending a Pd/SiO₂, a Pd/SiO₂/Al₂O₃ or a Pd/Al₂O₃ catalyst in a SnCl₂ solution and by reducing the metals by sparging with hydrogen.

The tin is more preferably deposited by the precipitation of a tin salt solution on an alkali impregnated Pd.Ag/SiO₂, Pd.Ag/SiO₂/Al₂O₃ or Pd.Ag/Al₂O₃ catalyst, more preferably Pd/SiO₂, Pd/SiO₂/Al₂O₃ or Pd/Al₂O₃ catalyst. The catalysts can subsequently be filtered off, washed, dried and reduced. Thus, the Pd.Sn/SiO₂, the Pd.Sn/SiO₂/Al₂O₃ or the Pd.Sn/Al₂O₃ catalysts can be prepared by impregnate a Pd/SiO₂, a Pd/SiO₂/Al₂O₃ or a Pd/Al₂O₃ catalyst in a Na₂CO₃ solution, by successively precipitating the SnCl₂ solution on the catalysts under rotavapor vacuum, and by calcinating it in a H₂ atmosphere.

The tin is highly more preferably deposited by the simultaneous precipitation of a palladium and tin salts ethanolic solution on an alkali impregnated SiO₂, a SiO₂/Al₂O₃ or a Al₂O₃ support. The catalysts can subsequently be filtered off, washed, dried and reduced. Thus, the Pd.Sn/SiO₂, the Pd.Sn/SiO₂/Al₂O₃ or the Pd.Sn/Al₂O₃ catalysts can be prepared by impregnate a SiO₂, a SiO₂/Al₂O₃ or a Al₂O₃ support in a Na₂CO₃ solution, by successively precipitating the mixed H₂PdlC₄/SnCl₂ ethanolic solution on the supports under rotavapor vacuum, and by calcinating it in a H₂ atmosphere.

The silver is preferably deposited by impregnation of a Pd.Sn/SiO₂, a Pd.Sn/SiO₂/Al₂O₃ or a Pd.Sn/Al₂O₃ with a aqueous solution comprising the silver constituent under a reducing atmosphere, such as, for example, a hydrogen atmosphere. The deposition of the silver by reduction with hydrogen or by any other form of reduction also results in the further reduction of the palladium. The catalysts can subsequently be filtered off, washed and dried. Thus, the Pd.Sn.Ag/SiO₂, the Pd.Sn.Ag/SiO₂/Al₂O₃ or the Pd.Sn.Ag/Al₂O₃ catalysts can be prepared by suspending a Pd.Sn/SiO₂, a Pd.Sn/SiO₂/Al₂O₃ or a Pd.Sn/Al₂O₃ catalyst in an AgNO₃ solution and by reducing the metals by sparging with hydrogen.

The silver is more preferably deposited by the precipitation of a silver salt solution on an alkali impregnated Pd.Sn/SiO₂, a Pd.Sn/SiO₂/Al₂O₃ or a

Pd.Sn/Al₂O₃ catalyst. The catalysts can subsequently be filtered off, washed, dried and reduced. Thus, the Pd.Sn.Ag/SiO₂, the Pd.Sn.Ag/SiO₂/Al₂O₃ or the Pd.Sn.Ag/Al₂O₃ catalysts can be prepared by impregnate a Pd.Sn/SiO₂, a Pd.Sn/SiO₂/Al₂O₃ or a Pd.Sn/Al₂O₃ catalyst in a Na₂CO₃ solution, by successively precipitating the AgNO₃ solution on the catalysts under rotavapor vacuum, and by calcinating it in a H₂ atmosphere.

Thus, the present invention also relates to a process for the manufacture of a hydrogenation catalyst based on palladium on an aluminium oxide (Al₂O₃), on a silicon oxide (SiO₂) or on an aluminosilicate support, wherein the catalyst comprises palladium and tin, and wherein the catalyst optionally further comprises silver, the process comprising simultaneously or successively impregnating and/or precipitating the required amount by weight with respect to the total weight of the catalyst of palladium, tin, and optionally further silver, in any of the amounts as given above in any in % by weight or g per kg catalyst, on the aluminium oxide (Al₂O₃), on the silicon oxide (SiO₂) or on an aluminosilicate support.

For example, the present invention also relates to a process for the manufacture of hydrogenation catalysts based on palladium on an aluminium oxide (Al₂O₃), a silicon oxide (SiO₂) or an aluminosilicate support, wherein the catalyst comprises an amount of palladium from 0.1 to 0.90% by weight with respect to the weight of the catalyst, an amount of tin of up to 0.045% by weight, e.g. of from 0.0005 to 0.045% by weight, and optionally an amount of silver of up to 0.06% by weight, e.g. of from 0.01 to 0.06% by weight, with respect to the weight of the catalyst, the process comprising successively impregnating the palladium, tin and optionally silver in said amounts on an aluminium oxide (Al₂O₃), a silicon oxide (SiO₂) or an aluminosilicate support. The preferred embodiments of hydrogenation catalysts based on palladium on an aluminium oxide (Al₂O₃), a silicon oxide (SiO₂) or an aluminosilicate support can be prepared in the same manner by simply applying in the process for the manufacture of hydrogenation catalysts based on palladium on aluminium oxide (Al₂O₃), a silicon oxide (SiO₂) or an aluminosilicate support the respective amounts of palladium, tin and optionally silver selected from the ranges or values described above in the context of the hydrogenation catalyst compositions. As described above, the support material can be an aluminium oxide (Al₂O₃), a silicon oxide (SiO₂) or an aluminosilicate. According to the variants described above the support can be silicon oxide (SiO₂), can be a silicon oxide (SiO₂) comprising only or a certain amount of intra-framework aluminium (aluminosilicate) and/or extra-framework aluminium oxide (Al₂O₃), e.g. as typically in the art a gamma-aluminium oxide (gamma-Al₂O₃); or preferably the support is aluminium oxide (Al₂O₃), e.g. as typically in the art a gamma-aluminium oxide (gamma-Al₂O₃); or the support is in a more preferred embodiment a delta-aluminium oxide (delta-Al₂O₃); or the support is a mixture of said support materials.

The catalysts according to the present invention are suitable for all types of hydrogenation catalysis. The invention consequently also relates to their use in hydrogenation reactions. Mention may be made, as examples of hydrogenation reactions, of the hydrogenation of alkynes to alkenes, the hydrogenation of CO to methanol and the reduction of unsaturated aldehydes to unsaturated alcohols. The catalysts according to the invention are used with very good results in processes for the manufacture of hydrogen peroxide. Consequently, the invention also relates to a process for the manufacture of hydrogen peroxide in the presence of catalyst according of the present invention. In principle, the catalyst of the present invention is suitable for any process of manufacturing hydrogen peroxide involving a catalytic hydrogenation.

In a particularly aspect the invention pertains to the use of a hydrogenation catalyst according to the invention, as described above, based on palladium on an aluminium oxide (Al₂O₃), a silicon oxide (SiO₂) or on an aluminosilicate support, wherein the catalyst comprises palladium in any of the above indicated ranges or amounts, tin in any of the above indicated ranges or amounts, and the optional silver in any of the above indicated ranges or amounts, in a process for the manufacture of hydrogen peroxide. Preferably the hydrogenation catalyst according to the invention is used in a process for the manufacture of hydrogen peroxide by the autoxidation process (AO-process), more preferably in a small-to-medium scale AO-process (mini-AO process) which is run with a capacity of up to 20 ktpa, preferably with a capacity of up to 10 ktpa, (as 100 %) hydrogen peroxide production. In most preferred variants of this aspect of the invention the hydrogenation catalyst according to the invention is used in such of said processes for the manufacture of hydrogen peroxide by the autoxidation process (AO-process) which are run without a reversion unit for regenerating the working solution. This latter aspect of working without a reversion unit is described in more detail below in the context of the process for the manufacture of hydrogen peroxide comprising carrying out a hydrogenation reaction using a catalyst of the present invention. For more details about capacity or capacity ranges reference is made to the below described process for the manufacture of hydrogen peroxide using a hydrogenation catalyst of the present invention. These details about capacity or capacity ranges given for the process for the manufacture of hydrogen peroxide equally apply to the present variant of the invention of the use of a hydrogenation catalyst as described above. Furthermore, for any possible option and preferred variant regarding ranges or amounts of the catalytic metals palladium, tin and optional silver, as well as for the details about the aluminium oxide (Al₂O₃), the silicon oxide (SiO₂) or aluminosilicate support and any composition, range or amount thereof, reference is made to the above described hydrogenation catalyst of the present invention. These details given above for the hydrogenation catalyst of the present invention equally apply to the present aspect of the invention of using said hydrogenation catalyst of the invention.

Thus, the hydrogenation catalyst of the invention is particularly suitable for the manufacture of hydrogen peroxide by the AO-process wherein said process is a small to medium scale AO-process with a production capacity of hydrogen peroxide of up to 20 kilo tons per year (ktpa). Preferably said process is operated with a production capacity of hydrogen peroxide of up to 15 kilo tons per year (ktpa), and more preferably with a production capacity of hydrogen peroxide of up to 10 kilo tons per year (ktpa). The dimension ktpa (kilo tons per annum) relates to metric tons. Further, said small- to medium-scale hydrogen peroxide production process scale is referred herein as "mini-AO-process" when mentioned in the context of any aspect of the invention.

The process for the manufacture of hydrogen peroxide by an anthraquinone autoxidation process using the catalysts of the present invention may be large-to-mega scale AO- processes, but preferably is a process for the manufacture of hydrogen peroxide by an anthraquinone autoxidation in small-to-medium scale, in particular a mini-AO scale process. Typically, a mini-AO process is run with a capacity of 2 to 10 ktpa (as 100 %) hydrogen peroxide production. Laboratory trials have been carried out showing that the hydrogenation can be performed as fixed bed operation or in slurry hydrogenators, and that the process may be industrially operated with the hydrogenation catalyst according to the invention as well.

In a preferred aspect the invention also relates to a process for the manufacture of hydrogen peroxide using an anthraquinone autoxidation process (AO process) comprising carrying out a reaction using a catalyst based on palladium on aluminium oxide (Al₂O₃), a silicon oxide (SiO₂) or an aluminosilicate support according to the invention, wherein the process is a small-to-medium scale AO-process (mini-AO process), preferably a mini-AO process which is run with a production capacity of, for example, 2 to 10 ktpa (as 100%) hydrogen peroxide. In this AO-process, in particular in the mini-AO process, when catalysts in accordance with the present invention are used in the synthesis of hydrogen peroxide, a reduced rate of formation of the decomposition products of amylanthraquinone (AQ) and of amyltetrahydroanthraquinone (ATQ) is observed. In these AO-processes according to the invention the catalysts according to the invention as described above may be used in the general and in the preferred embodiments and the respective compositions and/or respective supports. In these AO-processes according to the invention the catalysts according to the invention as described above may be used on an aluminium oxide (Al₂O₃), a silicon oxide (SiO₂) or an aluminosilicate support, most preferably on a delta-aluminium oxide (delta-Al₂O₃), but if wished so, also on a silicon oxide (SiO₂) support, optionally comprising aluminium oxide (Al₂O₃).

More generally, in this aspect the invention pertains to a process for the manufacture of hydrogen peroxide comprising carrying out a hydrogenation reaction using a catalyst based on palladium on an aluminium oxide (Al₂O₃), a silicon oxide (SiO₂) or on an aluminosilicate support according to any of the above described embodiments of the invention, wherein the catalyst comprises palladium and tin in any of the above indicated ranges or amounts, and optionally silver in any of the above indicated ranges or amounts. Preferably, in this aspect of the invention relates to a process for the manufacture of hydrogen peroxide by the autoxidation process (AO-process), and in particular the invention relates to a small-to-medium scale AO-process (mini-AO process) which is run with a capacity of up to 20 ktpa, more preferably with a capacity of up to 10 ktpa, (as 100%) hydrogen peroxide production. In most preferred variants of this aspect of the invention of processes for the manufacture of hydrogen peroxide by the autoxidation process (AO-process) said processes are run without a reversion unit for regenerating the working solution. This latter aspect of working without a reversion unit is described in more detail below.

In the embodiments of the invention relating to a small-to-medium scale AO-process (mini-AO process), as indicated here before, such processes are run with a capacity of up to 20 ktpa, more preferably with a capacity of up to 10 ktpa, (as 100%) hydrogen peroxide production. Variants of this small-to-medium scale AO-process (mini-AO process) for the manufacture of hydrogen peroxide according to the invention are characterized in that the hydrogenation reaction using a catalyst based on palladium on an aluminium oxide (Al₂O₃), a silicon oxide (SiO₂) or on an aluminosilicate support according to any of the above described embodiments of the hydrogenation catalyst according to the invention, are run as a small-to-medium scale AO-process (mini-AO process) with a capacity in the range of 2 to 15 ktpa, preferably in the range of 2 to 10 ktpa, (as 100 %) hydrogen peroxide production. This small-to-medium scale AO-process (mini-AO process) with said capacity, in the more preferred variants, is also run without a reversion unit for regenerating the working solution.

In such mini-AO-process according to the invention may be designed in a flexible manner for a variety of any other ranges within said capacity scope, e.g. to provide a capacity which best fits to the local needs where the process is operated. Thus, as an example and without limitation, possible capacity ranges are from 2-5 ktpa, 2-6 ktpa, 2-7 ktpa, 2-8 ktpa, 2-9 ktpa, 2-10 ktpa, 2-11 ktpa, 2-12 ktpa, 2-13 ktpa, 2-14 ktpa, 2-15 ktpa; 3-5 ktpa, 3-6 ktpa, 3-7 ktpa, 3-8 ktpa, 3-9 ktpa, 3-10 ktpa, 3-11 ktpa, 3-12 ktpa, 3-13 ktpa, 3-14 ktpa, 3-15 ktpa; 4-5 ktpa, 4-6 ktpa, 4-7 ktpa, 4-8 ktpa, 4-9 ktpa, 4-10 ktpa, 4-11 ktpa, 4-12 ktpa, 4-13 ktpa, 4-14 ktpa, 4-15 ktpa; 5-6 ktpa, 5-7 ktpa, 5-8 ktpa, 5-9 ktpa, 5-10 ktpa, 5-11 ktpa, 5-12 ktpa, 5-13 ktpa, 5-14 ktpa, 5-15 ktpa; 6-7 ktpa, 6-8 ktpa, 6-9 ktpa, 6-10 ktpa, 6-11 ktpa, 6-12 ktpa, 6-13 ktpa, 6-14 ktpa, 6-15 ktpa; 7-8 ktpa, 7-9 ktpa, 7-10 ktpa, 7-11 ktpa, 7-12 ktpa, 7-13 ktpa, 7-14 ktpa, 7-15 ktpa; 8-9 ktpa, 8-10 ktpa, 8-11 ktpa, 8-12 ktpa, 8-13 ktpa, 8-14 ktpa, 8-15 ktpa; 9-10 ktpa, 9-11 ktpa, 9-12 ktpa, 9-13 ktpa, 9-14 ktpa, 9-15 ktpa; 10-11 ktpa, 10-12 ktpa, 10-13 ktpa, 10-14 ktpa, 10-15 ktpa; 11-12 ktpa, 11-13 ktpa, 11-14 ktpa, 11-15 ktpa; 12-13 ktpa, 12-14 ktpa, 12-15 ktpa; 13-14 ktpa, 13-15 ktpa; 14-15 ktpa.

In a preferred process for the manufacture of hydrogen peroxide by the AO-process according to the invention the process has a production capacity of hydrogen peroxide of 2,000 to 10,000 metric tons per year. Typically, the size of a plant for the manufacture of hydrogen peroxide depends on the production capacity. For example, within the preferred design range between 2 and 10 ktpa, a plant of 3 ktpa capacity will be much smaller than a 10 ktpa plant. Therefore, in a more preferred embodiment of the invention, e.g. for economic reasons, the design of the mini-AO-process pertains to manufacture of hydrogen peroxide by the AO-process or to mini-AO-plants with narrower capacity ranges, as for instance, 2-3 ktpa, 3-5 ktpa, 5-7.5 ktpa or 7.5-10 ktpa. Similarly, also for higher capacities the more narrow capacity ranges are preferred, as for instance, 10-12.5 ktpa, 12.5-15 ktpa.

The hydrogenation catalyst used in the processes according to the invention may comprise palladium and tin in any of the above indicated ranges or amounts, and optionally silver in any of the above indicated ranges or amounts. Thus, in an embodiment the invention also pertains to a process for the manufacture of hydrogen peroxide using an anthraquinone auto-oxidation process comprising carrying out a reaction using a catalyst based on palladium on an aluminium oxide (Al₂O₃), a silicon oxide (SiO₂) or an aluminosilicate support, wherein the catalyst comprises an amount of palladium from 0.1 to 0.9 % by weight with respect to the weight of the catalyst and an amount of tin of up to, e.g. of from 0.0005% up to 0.045% by weight, preferably tin in an amount of from 0.0005% up to 0.040% by weight, more preferably of from 0.0005% up to 0.035% by weight, with respect to the weight of the catalyst, and wherein optionally the catalyst further comprises silver in an amount of up to 0.06 % by weight, e.g. 0.01% up to 0.06% by weight, with respect to the weight of the catalyst. For any other possible option and preferred variant regarding ranges or amounts of the catalytic metals palladium, tin and optional silver, as well as for the details about the aluminium oxide (Al₂O₃), the silicon oxide (SiO₂) or aluminosilicate support and any composition, range or amount thereof, reference is made to the above described hydrogenation catalyst of the present invention. These details given above for the hydrogenation catalyst of the present invention equally apply to the present aspect of the invention of the manufacture of hydrogen peroxide using said hydrogenation catalyst of the invention.

As mentioned above, the hydrogenation catalyst of the present invention is suitable for the use in processes for the manufacture of hydrogen peroxide by the autoxidation process (AO-process) which are run without a reversion unit for regenerating the working solution. Therefore, the hydrogenation catalyst of the present invention is beneficially used in a small to medium scale, also remotely controllable, process for the production of hydrogen peroxide, which process is feasible to be performed at a customer site, especially a remote (customer) site and thus is suitable for an end user friendly plant, which may also be remotely controlled from a different and even distant site, e.g. from a distant large-scale hydrogen peroxide production site, and which process stably runs for longer periods, e.g. for periods of at least several months, and at minimum for at least 3 months, in continuous operation with a minimum need of local (e.g. on customer site) technical and/or physical intervention, in particular with regard to the reversion of the working solution and/or the regeneration of the hydrogenation catalyst. The intermittent and/or periodical reversion of the working solution and/or the regeneration of the hydrogenation catalyst may be performed in various manners. For instance, normally the working solution and/or the catalyst are removed together at the same time from the mini-AO reactor system or they are removed separately at different times, as appropriate according to the process parameters and the process efficiency related to either the working solution or the hydrogenation catalyst.

In this case of running the manufacture of hydrogen peroxide by the autoxidation process (AO-process) without a reversion unit, the working solution is regenerated in separate equipment for the reversion of the working compounds contained in the working solution. This reversion of the working solution may be performed, for instance, at a different site in the equipment of another hydrogen peroxide production plant, e.g. in the respective regeneration equipment of a similar or preferably a larger scale hydrogen peroxide production plant. Alternatively, the working solution may be regenerated in separate mobile regeneration equipment for the reversion of the working compounds contained in the working solution, e.g. in a mobile regeneration unit that is used on demand or as appropriate in a number of different locations where a small to medium hydrogen peroxide manufacturing process according to the AO-process is performed. Another option is to intermittently or periodically perform the regeneration of the working solution under particular conditions in the main equipment of the small to medium hydrogen peroxide manufacturing process according to the AO-process itself.

Similarly, as described above for the reversion of the working solution, the hydrogenation catalyst of the present invention may be regenerated at a different site in the equipment of another similar scale or preferably a larger scale hydrogen peroxide production plant. Or, the hydrogenation catalyst may be regenerated in separate mobile regeneration equipment, e.g. in a mobile catalyst regeneration unit that is used on demand or as appropriate in a number of different locations where a small to medium hydrogen peroxide manufacturing process according to the AO-process is performed. Another option is to intermittently or periodically perform the regeneration of hydrogenation catalyst under particular conditions in the main equipment of the small to medium hydrogen peroxide manufacturing process according to the AO-process itself.

According to this embodiment of the invention, wherein the AO-process, preferably the mini-AO-process, for the manufacture of hydrogen peroxide is performed such that the working solution and/or the hydrogenation catalyst are only periodically replaced for regeneration or reactivation, the process may be operated for periods of several months without replacement of the working solution for regeneration (reversion) or reactivation of the hydrogenation catalyst. The periodical replacement of the working solution and the catalyst are each independent from each other, but may be reasonably also be replaced at the same time or at different times or after the same or different periods of operation. Thus, the reversion and/or the regeneration of the catalyst is only intermittently performed after a continuous operation period of the process for at least 3 months, e.g. the working solution and/or the hydrogenation catalyst is normally replaced only after periods of at least 3 months operation of the process. Depending on the type of working solution and/or catalyst, and the particular design and capacity of the AO-process, in particular of the mini-AO-process, the process may be such robust that it may be operated even for periods of individually at least 4, 5, 6, 7, 8, 9, 10, 11 or 12 months without replacement of the working solution for regeneration (reversion) and/or replacement or reactivation of the catalyst.

Therefore, in preferred embodiments, the invention in this aspect also relates to a process for the manufacture of hydrogen peroxide using a hydrogenation catalyst according to the invention in any of the above described ranges and amounts, characterized in that the processes for the manufacture of hydrogen peroxide by the autoxidation process (AO-process), preferably the small-to-medium scale AO-process (mini-AO process), is run without a reversion unit for regenerating the working solution, and characterized in that the working solution and/or the catalyst are replaced and/or treated for regeneration or reactivation only intermittently with a low frequency, preferably characterized in that the working solution and/or the catalyst are replaced and/or treated for regeneration or reactivation only periodically after periods of at least 3 months, preferably at least 6 month, more preferably at least 9 months, and most preferred at least 12 months.

Usually, in practice the continuous working period may be individually from 3-4 months, 3-5 months, 3-6 months, 3-7 months, 3-8 months, 3-9 months, 3-10 months, 3-11 months, 3-12 months; 4-5 months, 4-6 months, 4-7 months, 4-8 months, 4-9 months, 4-10 months, 4-11 months, 4-12 months; 5-6 months, 5-7 months, 5-8 months, 5-9 months, 5-10 months, 5-11 months, 5-12 months; 6-7 months, 6-8 months, 6-9 months, 6-10 months, 6-11 months, 6-12 months; 7-8 months, 7-9 months, 7-10 months, 7-11 months, 7-12 months; 8-9 months, 8-10 months, 8-11 months, 8-12 months; 9-10 months, 9-11 months, 9-12 months; 10-11 months, 10-12 months or 11-12 months.

In carrying out the process of the invention, using a hydrogenation catalyst as defined in the present invention, a working solution containing an anthraquinone working compound is dissolved in a suitable organic solvent. Working compounds that can be used in the process of the invention are those anthraquinones, in particular alkylanthraquinones, and mixtures thereof conventionally used for the manufacture of hydrogen peroxide by the AO-process.

Suitable anthraquinones are 2-alkylanthraquinones and include for example 2-ethylanthraquinone, 2-isopropylanthraquinone, 2-n-butylanthraquinone, 2-sec butylanthraquinone, 2-tert-butylanthraquinone, 2-amylanthraquinone, 2-sec amylanthraquinone, 2-tert-amylanthraquinone or mixtures thereof. Although the hydrogen peroxide AO-process is normally possible also with 2-alkyl-5,6,7,8-tetrahydroanthraquinones and their mixtures, the concentrations of these tetrahydroanthraquinones are minimized in the process according to the present invention.

The organic solvents that can be used in the process of the invention, using a hydrogenation catalyst as defined in the present invention, are those solvents and mixtures thereof conventionally used in the manufacture of hydrogen peroxide by the AO-process. In particular, solvent mixtures of two or more solvents are used which are equally suitable for the different dissolution properties of quinones. Thus, usually mixtures of nonpolar aromatic solvents (quinone solvents) and polar solvents (hydroquinone solvents) are used in the manufacture of hydrogen peroxide by the AO-process.

Examples of suitable aromatic solvents include alkyl-substituted aromatics, particularly C 8 and C 12 alkyl benzenes or mixtures thereof. Examples of suitable polar solvents include higher alcohols (e. g. diisobutylcarbinol or 2-octanol), alkylated and arylated urea, phosphoric acid esters (e. g. trioctyl phosphate), 2-pyrrolidone, 2-methylcyclohexyl acetate or mixtures thereof. Examples of suitable solvent mixtures include mixtures of C10 alkyl aromatics with diisobutylcarbinol or with 2-methylcyclohexyl acetate. Generally the working solution contains from 2 to 40 % by wt of the anthraquinone or the mixture thereof.

As a matter of example, but without limitation a preferred working solution used in the process for the manufacture of hydrogen peroxide by the AO-process according to the invention may be a AQ/SX/S-150 composition, wherein AQ means a 2-alkylanthraquinone or a mixture thereof. A suitable 2-alkylanthraquinone may be a 2-amylanthraquinone or a mixture thereof, for instance, a mixture of tertiary amyl substituted anthraquinone and the secondary amyl substituted anthraquinone), SX means sextate or 2-methylcyclohexyl acetate (CAS no. 5726-19-2) which is a commercially available industrial solvent; and S-150 means a commercially available aromatic hydrocarbon solvent of type 150 from the Solvesso^{®} series. S-150 (Solvesso^{®}-150; CAS no. 64742-94-5) is known as an aromatic solvent of high aromatics which offer high solvency and controlled evaporation characteristics that make them excellent for use in many industrial applications and in particular as process fluids. The Solvesso^{®} aromatic hydrocarbons are available in three boiling ranges with varying volatility, e.g. with a distillation range of 165-181°C, of 182-207 °C or 232-295 °C. They may be obtained also naphthalene reduced or as ultra-low naphthalene grades. Solvesso^{®} 150 (S-150) is characterized as follows: distillation range of 182-207 C; flash point of 64 °C; aromatic content of greater than 99 % by wt; aniline point of 15 °C; density of 0.900 at 15 °C; and an evaporation rate (nButAc=100) of 5.3.

The process for the manufacture of hydrogen peroxide according to the invention, using a hydrogenation catalyst as defined in the present invention, which is performed without any simultaneous regeneration (reversion) of the working solution, may optionally comprise an acidity control of the working solution. Thus, the process may involve facilities or means suited to measure the acidity of the working solution and further facilities or means suited for adapting and/or maintaining the acidity within predetermined ranges for running a continuous AO-process, in particular a continuous mini-AO-process, without any simultaneous regeneration (reversion) of the working solution. Thus, instead of involving a reversion unit, optionally the AO-process, in particular the mini-AO-process, may foresee e.g. an alumina bed or other means for acidity control of the working solution. The acidity control may also be performed, as an example but without limitation, by e.g. inorganic oxides or e.g. carbonates.

The hydrogenation using a catalyst as defined according the present invention may be performed in a conventional manner as in the manufacture of hydrogen peroxide by the Riedel-Pfleiderer AO-process and its variants. Thus, the hydrogenation may be operated with a fixed-bed catalyst made of a bimetallic Pd/Sn catalyst or of a trimetallic Pd/Sn/Ag catalyst, each as defined according the present invention. If wished so, the hydrogenation may also be operated with a slurry catalyst made of a bimetallic Pd/Sn catalyst or of a trimetallic Pd/Sn/Ag catalyst, each as defined according the present invention. The fixed-bed catalyst usually consists of a packing of solid hydrogenation catalyst particles. It is generally desirable that the average diameter of these particles should be in the range of from about 1.0 to 5.0 mm. In a preferred embodiment of the process according to the invention the catalyst granules in the fixed bed have an average particle diameter of from 2.0 to 4.0 mm, more preferably of from 2.5 to 3.0 mm. Regarding particle sizes and ranges reference is made to the variants and details already described above. The bimetallic Pd/Sn catalysts or trimetallic Pd/Sn/Ag catalyst, each as defined according the present invention, display high initial selectivity and long-term stability and good productivity.

The hydrogenation using a catalyst as defined according the present invention in the anthraquinone cyclic process can be performed continuously and conventional hydrogenation reactors can be used, such as e. g. stirred-tank reactors, tubular-flow reactors, loop reactors or air-lift pump reactors, but particularly in fixed-bed reactors. Optionally, the reactors can be equipped with distribution devices, such as e. g. static mixers or injection nozzles, to distribute the hydrogen in the working solution. Hydrogenation is typically performed at a temperature in the range from 20 to 100 °C, particularly preferably 40 to 80 °C. The pressure is preferably in the range from 0.1 MPa to 1 MPa (absolute), particularly preferably 0.2 MPa to 0.5 MPa (absolute). The hydrogenation is typically performed in such a way that the hydrogen introduced into the hydrogenation reactor is in practical terms entirely consumed in the hydrogenation stage. The amount of hydrogen is preferably chosen so that between 30 and 80 % of the total amount of reactant is converted from the quinone form into the hydroquinone form. Although in some of the AO-processes in the state of the art a mixture of alkyl anthraquinones and alkyl tetrahydroanthraquinones is used as the reactant, the present invention does not use such mixtures but only alkyl anthraquinones, and the amount of hydrogen is preferably chosen so that in the hydrogenation stage the alkyl anthraquinones are only converted into the hydroquinone form and no alkyl tetrahydroanthraquinones are formed.

The hydrogenating gas in the process can be hydrogen or the hydrogen may be diluted in an inert gas. The term inert gas is intended to denote a gas which does not react with the working solution including the alkylanthraquinone, nor with the hydrogenation catalyst or the alkylhydroanthraquinone produced. Examples of these inert gases are in particular rare gases, carbon dioxide, fluorinated gases such as HFA and nitrogen. Nitrogen has given good results. The proportion of inert gas in the hydrogen containing gas mixture can vary in the range of from about 0.5 to 99 % and preferably, in the range of from about 10 to 40 %.

In particular in the case of the mini-AO-process, for example but without limitation, some further process condition shall be mentioned. In this regard, the invention also pertains to a process for the manufacture of hydrogen peroxide using a hydrogenation catalyst according to the invention in any of the above described ranges and amounts, characterized by at least one of the following hydrogenation process conditions or any combination thereof: a) a pressure of the hydrogenator degasser in the range of about 0.5 barg to about 5 barg; b) a temperature of the hydrogenator outlet in the range of about 40 to about 80 C; c) a differential pressure in the hydrogenation column in the range of about 0 to about 2 barg, or optionally even higher than 2 barg.

Should the disclosure of any of the patents, patent applications, and publications that are incorporated herein by reference be in conflict with the present description to the extent that it might render a term unclear, the present description shall take precedence over them.

The examples which follow are intended to illustrate the present invention without, however, limiting the scope thereof.

### EXAMPLES

The hydrogenation catalysts based on palladium on an aluminium oxide (Al₂O₃), a silicon oxide (SiO₂) or an aluminosilicate support according to the present invention can be prepared by the usual techniques, such as, for example by co-impregnation of the metals on the support, by co-precipitation of the metals on the support or by simultaneous or successive depositions of the metals on the support, for example, by impregnation and/or precipitation. The catalysts according to the invention are advantageously prepared by simultaneous depositions of the metals palladium and tin, and successively of silver on an aluminium oxide (Al₂O₃), on a silicon oxide (SiO₂) or on an aluminosilicate support by impregnation and/or precipitation.

### EXAMPLE 1

### Synthesis of a Palladium Catalysts (impregnation, blanc)

200 g of SiO₂, SiO₂/Al₂O₃ or Al₂O₃ carrier (mm large beads) are impregnated with a solution of 15 g of sodium carbonate (Na₂CO₃) dissolved in 100 ml of demineralized water. The solvent are then evaporated from the warmed mixture (120°C) in rotavapor. 400 g of an ethanolic solution of chloropalladic acid (H₂PdCl₄, 0.15% Pd by weight) is added dropwise over a period of 4 hours with a constant evaporation of ethanol. The resulting solids are then washed with demineralized water till the total removal of alkaline excess. The catalyst is finally dried at 110°C, calcined at 500°C under O₂ for 4 hours, then reduced under H₂ for 1 hour at 250°C.

The characteristics of the support obtained and of the catalyst formed are as follows:

The catalyst comprises an amount of palladium of 0.3% (0.30%) +/- 0.02% by weight, preferably in an amount of 0.3% (0.30%) +/- 0.01% by weight, with respect to the weight of the support. The Pd loading on supports has been determined by the ICP-OES method. Preferably, Pd is dispersed on the outer surface of the support (eggshell type), with a PdSn thickness inferior to 500 nm, more preferably inferior to 20 nm. The Pd profile in the support is characterized by Energy Dispersive X-ray coupled with a Scanning Electronic Microscope (SEM-EDX). Preferably, the catalyst particle size is ranging from 0.2 to 5 mm large, more preferably narrowly centered on 2 mm. The catalyst granulometry is determined either by sieving granulometry or laser granulometry. Accessible surface areas (BET method), porous volume and pore size distribution (BJH method) are respectively and preferably ranging from 100 to 500 m²/g, 0.1 to 0.8 cm³/g and 2 to 30 nm. Textural properties are determined by N₂ adsorption-desorption method.

### EXAMPLE 2

### Synthesis of a Palladium-Tin Catalysts (impregnation)

200 g of Pd/SiO₂, Pd/SiO₂/Al₂O₃ or Pd/Al₂O₃ (mm large beads) reduced catalyst are suspended in 500 ml of demineralized water. The mixture is then poured into a sealed glass reactor which is then degassed with N₂. After 10 minutes, 0.1597 g of anhydrous tin chloride II (SnCl₂) are added to the mixture and the system is purged with H₂. The mixture is then maintained under a flowing reducing H₂ atmosphere for further 3 hours. The solids are subsequently filtered off, and washed with demineralized water (5 times with 50 ml H₂O). The Pd.Sn/SiO₂, the Pd.Sn/SiO₂/Al₂O₃ or the Pd.Sn/Al₂O₃ solids are then dried overnight at 110°C, then calcined at 500°C for 4 h under N₂.

The characteristics of the support obtained and of the catalyst formed are as follows:

The catalyst comprises an amount of palladium of 0.3% (0.30%) +/- 0.02% by weight, preferably in an amount of 0.3% (0.30%) +/- 0.01% by weight, and an amount of tin of 0.03% +/- 0.005% with respect to the weight of the support. The Pd and Sn loadings on supports have been determined by the ICP-OES method. Preferably, Pd and Sn are intimately dispersed on the outer surface of the support (eggshell type), with a Pd.Sn thickness inferior to 500 nm, more preferably inferior to 20 nm. The Pd.Sn profile in the support is characterized by Energy Dispersive X-ray coupled with a Scanning Electronic Microscope (SEM-EDX). Preferably, the catalyst particle size is ranging from 0.2 to 5 mm large, more preferably narrowly centered on 2 mm. The catalyst granulometry is determined either by sieving granulometry or laser granulometry. Accessible surface areas (BET method), porous volume and pore size distribution (BJH method) are respectively and preferably ranging from 100 to 500 m²/g, 0.1 to 0.8 cm3/g and 2 to 30 nm. Textural properties are determined by N₂ adsorption-desorption method.

### EXAMPLE 3

### Synthesis of a Palladium-Tin Catalysts (simultaneous precipitation)

200 g of SiO₂, SiO₂/Al₂O₃ or Al₂O₃ carrier (mm large beads) are impregnated with a solution of 15 g of sodium carbonate (Na₂CO₃) dissolved in 100 ml of demineralized water. The solvent are then evaporated from the warmed mixture (120°C) in rotavapor. 400 g of an ethanolic solution of chloropalladic acid (H₂PdCl₄, 0.15% Pd by weight) and tin chloride (anhydrous SnCl₂, 0.04% by weight, in excess) is added dropwise over a period of 4 hours with a constant evaporation of ethanol. The resulting solids are then washed with demineralized water till the total removal of alkaline excess. The catalyst is finally dried at 110°C, calcined at 500°C under O₂ for 4 hours, then reduced under H₂ for 1 hour at 250°C.

The characteristics of the support obtained and of the catalyst formed are as follows:

The catalyst comprises an amount of palladium of 0.3% (0.30%) +/- 0.02% by weight, preferably in an amount of 0.3% (0.30%) +/- 0.01% by weight, and an amount of tin of 0.03% +/- 0.005% with respect to the weight of the support. The Pd and Sn loadings on supports have been determined by the ICP-OES method. Preferably, Pd and Sn are intimately dispersed on the outer surface of the support (eggshell type), with a Pd.Sn thickness inferior to 500 nm, more preferably inferior to 20 nm. The Pd.Sn profile in the support is characterized by Energy Dispersive X-ray coupled with a Scanning Electronic Microscope (SEM-EDX). Preferably, the catalyst particle size is ranging from 0.2 to 5 mm large, more preferably narrowly centered on 2 mm. The catalyst granulometry is determined either by sieving granulometry or laser granulometry. Accessible surface areas (BET method), porous volume and pore size distribution (BJH method) are respectively and preferably ranging from 100 to 500 m²/g, 0.1 to 0.8 cm³/g and 2 to 30 nm. Textural properties are determined by N₂ adsorption-desorption method.

### EXAMPLE 4

### Synthesis of Pd.Sn.Ag Catalysts According to the Invention (impregnation)

200 g of chlorine-free Pd.Sn/SiO₂, Pd.Sn/SiO₂/Al₂O₃ or Pd.Sn/Al₂O₃ (mm large beads) reduced catalyst are suspended in 500 ml of demineralized water. The mixture is then poured into a sealed glass reactor which is then degassed with N₂. After 10 minutes, 0.1417 mg of silver nitrate (AgNO₃) are added to the mixture and the system is purged with H₂. The mixture is then maintained under a flowing reducing H₂ atmosphere for further 1 hour. The solids are subsequently filtered off, and washed with demineralized water (5 times with 50 ml H₂O). The Pd.Sn.Ag/SiO₂, the Pd.Sn.Ag /SiO₂/Al₂O₃ or the Pd.Sn.Ag/Al₂O₃ solids are then dried overnight at 110°C, then calcined at 500°C for 4 h under N₂.

The characteristics of the support obtained and of the catalyst formed are as follows:

The catalyst comprises an amount of palladium of 0.3% (0.30%) +/- 0.02% by weight, preferably in an amount of 0.3% (0.30%) +/- 0.01% by weight, an amount of tin of 0.03% +/- 0.005%, preferably in an amount of 0.03% +/-0.001 % by weight, and an amount of silver of 0.045% +/- 0.005% by weight, preferably in an amount of 0.045 % +/- 0.01 % by weight with respect to the weight of the catalyst. The Pd, Sn and Ag loading on supports have been determined by the ICP-OES method. Preferably, the Pd, Sn and Ag are dispersed on the outer surface of the support (eggshell type), with a Pd.Sn.Ag thickness inferior to 500 nm, more preferably inferior to 20 nm. The Pd.Sn.Ag profile in the support is characterized by Energy Dispersive X-ray coupled with a Scanning Electronic Microscope (SEM-EDX). Preferably, the catalyst particle size is ranging from 0.2 to 5 mm large, more preferably narrowly centered on 2 mm. The catalyst granulometry is determined either by sieving granulometry or laser granulometry. Accessible surface areas (BET method), porous volume and pore size distribution (BJH method) are respectively and preferably ranging from 100 to 500 m²/g, 0.1 to 0.8 cm³/g and 2 to 30 nm. Textural properties are determined by N₂ adsorption-desorption method.

### EXAMPLE 5

### Synthesis of Pd.Sn.Ag Catalysts According to the Invention (precipitation)

200 g of Pd.Sn/SiO₂, Pd.Sn/SiO₂/Al₂O₃ or Pd.Sn/Al₂O₃ catalyst (mm large beads) are impregnated with a solution of 15 g of sodium carbonate (Na₂CO₃) dissolved in 100 ml of demineralized water. The solvent are then evaporated from the warmed mixture (120°C) in rotavapor. 400 g of an aqueous solution of silver nitrate (AgNO₃, 0.0225% Ag by weight) is added dropwise over a period of 4 hours with a constant evaporation of water. The resulting solids are then washed with demineralized water till the total removal of alkaline excess. The catalyst is finally dried at 110°C, calcined at 500°C under O₂ for 4 hours, then reduced under H₂ for 1 hour at 250°C.

The characteristics of the support obtained and of the catalyst formed are as follows:

The catalyst comprises an amount of palladium of 0.3% (0.30%) +/- 0.02% by weight, preferably in an amount of 0.3% (0.30%) +/- 0.01% by weight, an amount of tin of 0.03% +/- 0.005%, preferably in an amount of 0.03% +/-0.001% by weight, and an amount of silver of 0.045% +/- 0.005% by weight, preferably in an amount of 0.045 % +/- 0.01 % by weight with respect to the weight of the catalyst. The Pd, Sn and Ag loading on supports have been determined by the ICP-OES method. Preferably, the Pd, Sn and Ag are dispersed on the outer surface of the support (eggshell type), with a Pd.Sn.Ag thickness inferior to 500 nm, more preferably inferior to 20 nm. The Pd.Sn.Ag profile in the support is characterized by Energy Dispersive X-ray coupled with a Scanning Electronic Microscope (SEM-EDX). Preferably, the catalyst particle size is ranging from 0.2 to 5 mm large, more preferably narrowly centered on 2 mm. The catalyst granulometry is determined either by sieving granulometry or laser granulometry. Accessible surface areas (BET method), porous volume and pore size distribution (BJH method) are respectively and preferably ranging from 100 to 500 m²/g, 0.1 to 0.8 cm³/g and 2 to 30 nm. Textural properties are determined by N₂ adsorption-desorption method.

### EXAMPLES 6

### Evaluation of Acivity and Selectivity of Catalysts of the Invention

The catalysts of Examples 1, 2 and 3 (metals on 2-4 mm large γ,δ-alumina and 1 mm large δ-alumina) were evaluated from the viewpoint of their activity and of their selectivity in the hydrogenation of amylanthra-quinone (AQ) in a batch reactor according to the following procedure; the working solution (150 g), composed of 70 g/kg of amylanthraquinone dissolved in the Diisobutlcarbinol-Xylene mixture (20/80 ratio by weight), which is saturated with water, was hydrogenated at 60°C under a constant pressure of 1.2 bar absolute by a continuous recirculation throughout a bed of catalyst. The catalyst (67 g/kg working solution and 34 g/kg working solution respectively for 2-4 mm large beads and 1 mm large beads) is packed in a fixed-bed and the working solution is injected in the hydrogenator co-currently with H₂ in a donwflow mode.

The results obtained are combined in Table I (2-4 mm large γ,δ-alumina, contribution of Sn and Ag), in Table II (1 mm large δ-alumina, contribution of Sn) and in Table III (2-4 mm large, different loadings of tin) below:

**Table I: kinetics of catalysts (2-4 mm alumina)**

| **Catalyst (2-4 mm γ,δ-alumina)** | **Method** | **k₁ (10⁻⁵ s⁻¹)** | **k2 (10⁻⁷ s⁻¹)** | **k1/k2** |
|---|---|---|---|---|
| Pd0.3%/Al₂O₃ (Fig. 1) | Precipitation (blanc) | 1.49 | 3.11 | ∼ 50 |
| Pd0.3%Sn0.03%/ Al₂O₃ (Fig.1) | Simultaneous precipitation (Pd, Sn) | 2.58 | 3.01 | ∼ 85 |
| Pd0.3%Sn0.03% | Simultaneous precipitation (Pd, Sn), Impregnation (Ag) | 1.99 | 1.26 | ∼ 160 |
| Ag0.045%/Al₂O₃ | | | | |

**Table II: kinetics of catalysts (1 mm alumina)**

| **Catalyst (1 mm δ-alumina)** | **Method** | **k1 (10⁻⁵ s⁻¹)** | **k2 (10⁻⁷ s⁻¹)** | **k1/k2** |
|---|---|---|---|---|
| Pd0.25%/Al₂O₃ (Fig. 2) | Precipitation (blanc) | 3.70 | 5.13 | ∼ 70 |
| Pd0.25%Sn0.02%/Al₂O₃ (Fig. 2) | Simultaneous precipitation (Pd, Sn) | 4.77 | 5.02 | ∼ 95 |

Where k1 is the kinetic constant of the first AQ to AQH hydrogenation reaction, whereas k2 is the kinetic constant related to the AQH to ATQH overhydrogenation reaction. The k1 kinetic constant is recovered from the first rate of the test-batch hydrogenation curve, whereas k2 value is acquired by the determination of ATQ amount along the time through 3 HPLC measurements executed during the overhydrogenation course. High k1/k2 ratio can be understood as selective process toward the hydrogenation of AQ to AQH, and consequently, for similar k2, a more active process.

Tin addition to palladium-based catalysts is known to enhance selectively the hydrogenation of carbonyl functions. These bimetallic systems are largely used for the chemoselective reduction of α,β-unsaturated aldehydes into α,β-unsaturated alcohols with minor hydrogenation of unsaturated bonds. It can be deduced from the above results, whatever the particle size of the support, that the hydrogenation of AQ to AQH is clearly improved by the addition of the tin promoter onto the Pd catalyst. Additionally, combination of silver, known to reduce selectively overhydrogenation reaction (low k2), with tin provide a catalyst with the optimal k1/k2 ratio. Both positive effects from silver (selectivity) and tin (activity) are observed with the trimetallic Ag.Sn.Pd/Al₂O₃ catalyst.

**Table III: Selectivity as a function of the tin loading (2-4 mm alumina)**

| **Tin loading (%)** | **k1/k2** |
|---|---|
| 0.000 | 50 |
| 0.005 | 70 |
| 0.030 | 85 |
| 0.044 | 50 |
| 0.067 | 45 |

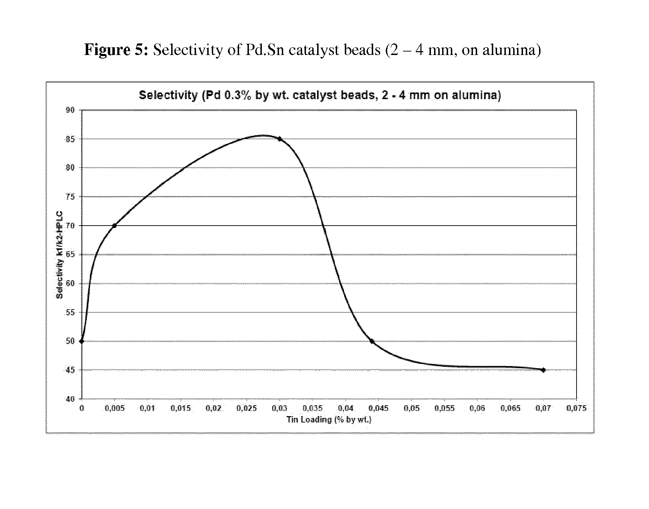

Fig. 5 shows a graph of the selectivity as a function of the tin loading.

### EXAMPLE 7

### A method for determining the particle size of 2 - 4 mm large beads

The sieves were assembled in order of increasing aperture sizes on a base plate. 50.0 g (+/-0.1) of catalyst were weighted, placed on the top sieve and covered with a lid. The stack of sieves was set in the shaker (Sieve shaking machine, as described in ISO 3118 (1976), e.g. Rotap International Combustion Ltd, Derby, UK) for a 10 minutes run. Then, the stack of sieves and the lid were removed, any particles onto the top sieve were brushed and the material was transferred in a pre-tared beaker and weighed. After having weighed the catalyst, the contents were emptied into a glass jar and the beaker was reweighed. The same operation was carried out for each of the sieves. The base plate contents were weighed. These contents resulted in different mass fractions named A, B, C, D, E, F, G, H and I gram respectively.

Table IV and Fig. 3 show some further data exemplifying suitable particle sizes and distributions.

**Table IV: Particle size distribution (2-4 mm)**

| Fraction | Size distribution (µm) | Weight (g) | Cumul. weight (g) | Fraction (%) | Cumul. fraction (%) |
|---|---|---|---|---|---|
| I | < 1800 | 0 | 0 | 0 | 0 |
| H | 1800 - 2000 | 0.020 | 0.020 | 0.04 | 0.04 |
| G | 2000 - 2360 | 0.498 | 0.518 | 0.99 | 1.03 |
| F | 2360 - 2800 | 17.650 | 18.168 | 35.00 | 36.02 |
| E | 2800 - 3150 | 15.652 | 33.819 | 31.03 | 67.06 |
| D | 3150 - 3350 | 8.903 | 42.722 | 17.65 | 84.71 |
| C | 3350 - 3500 | 5.333 | 48.055 | 10.57 | 95.28 |
| B | 3500 - 4000 | 2.352 | 50.406 | 4.66 | 99.94 |
| A | > 4000 | 0.032 | 50.438 | 0.06 | 100.00 |

### EXAMPLE 8

### A method for determining the particle size of 1 mm large beads

Alumina beads were dispersed into methanol and the particle size distribution was determined during 90 seconds through laser granulometry (Beckman Coulter LS 230).

Table V and Fig. 4 show some further data exemplifying suitable particle sizes and distributions.

**Table V: Particle size distribution (1 mm)**

| Size distribution (µm) | Fraction (%) | Cumul. fraction (%) |
|---|---|---|
| < 780 | 0 | 0 |
| 786.9 | 8.24 | 0 |
| 863.9 | 28.7 | 8.24 |
| 948.3 | 38 | 37 |
| 1041 | 21.1 | 75 |
| 1143 | 3.98 | 96.1 |
| 1255 | 0 | 100 |
| > 1377 | 0 | 100 |

Mean diameter is around 982.7 µm.

## Claims

1. Hydrogenation catalyst based on palladium on an aluminium oxide (Al₂O₃), on a silicon oxide (SiO₂) or on an aluminosilicate support, wherein the catalyst comprises an amount of palladium from 0.1 to 0.9 % by weight with respect to the weight of the catalyst and an amount of tin of up to 0.045% by weight preferably of up to 0.040% by weight, more preferably of up to 0.035% by weight, with respect to the weight of the catalyst, and wherein optionally the catalyst further comprises silver in an amount of up to 0.06 % by weight with respect to the weight of the catalyst.

2. Hydrogenation catalyst based on palladium on an aluminium oxide (Al₂O₃), on a silicon oxide (SiO₂ or on an aluminosilicate support according to claim 1, wherein the catalyst comprises an amount of palladium from 0.2 to 0.8% by weight, preferably from 0.2 to 0.7% by weight, in particular from 0.2 to 0.6% by weight, more preferably from 0.25 to 0.55% by weight, and most preferably of about 0.3% or about 0.5% by weight, with respect to the weight of the catalyst.

3. Hydrogenation catalyst based on palladium on an aluminium oxide (Al₂O₃), on a silicon oxide (SiO₂) or on an aluminosilicate support according to anyone of claim 1 to 2, wherein the catalyst comprises an amount of tin from 0.0005 to 0.0450% by weight, preferably from 0.001 to 0.040% by weight, more preferably from 0.005 to 0.0375% by weight, in particular from 0.010 to 0.035% by weight, even more preferably from 0.015 to 0.035% by weight, in particular from 0.020 to 0.032% by weight, and most preferably of about 0.030% by weight, with respect to the weight of the catalyst.

4. Hydrogenation catalyst based on palladium on an aluminium oxide (Al₂O₃), on a silicon oxide (SiO₂) or on an aluminosilicate support according to anyone of claim 1 to 2 comprising, with respect to the total weight of the catalyst:
palladium from 0.1 to 0.9% by weight; and tin from 0.0005 to 0.0450% by weight, preferably from 0.001 to 0.040% by weight, more preferably from 0.005 to 0.0375% by weight, in particular from 0.010 to 0.035% by weight, even more preferably from 0.015 to 0.035% by weight, in particular from 0.020 to 0.032% by weight, and most preferably of about 0.030% by weight; and wherein optionally the catalyst further comprises silver in an amount of up to 0.06 % by weight; and the silicon oxide (SiO₂) and/or aluminium oxide (Al₂O₃) support adding up to 100% by weight of the catalyst:

5. Hydrogenation catalyst based on palladium on an aluminium oxide (Al₂O₃), on a silicon oxide (SiO₂) or on an aluminosilicate support according to claim 4 comprising, with respect to the total weight of the catalyst, the palladium in an amount of from 0.2 to 0.8% by weight, preferably from 0.2 to 0.7% by weight, in particular from 0.2 to 0.6% by weight, more preferably from 0.25 to 0.55% by weight, and most preferably of about 0.3% or about 0.5% by weight.

6. Hydrogenation catalyst based on palladium on an aluminium oxide (Al₂O₃), on a silicon oxide (SiO₂) or on an aluminosilicate support according to anyone of claim 1 to 5, wherein the catalyst comprises an amount of silver from 0.035 to 0.055% by weight, preferably from 0.040 to 0.055% by weight, more preferably 0.040 to 0.050% by weight, and most preferably of about 0.045% by weight, with respect to the weight of the catalyst.

7. Hydrogenation catalyst based on palladium on an aluminium oxide (Al₂O₃), on a silicon oxide (SiO₂) or on an aluminosilicate support according to claim 1 comprising per kg of catalyst:
from 1 to 9 g of palladium;
and tin from 0.005 to 0.450 g, preferably from 0.01 to 0.40 g, more preferably from 0.05 to 0.375 g, in particular from 0.10 to 0.35 g, even more preferably from 0.15 to 0.35 g, in particular from 0.20 to 0.32 g, and most preferably of about 0.30 g; and wherein optionally the catalyst further comprises silver in an amount of up to 0.60 g;
and the aluminium oxide (Al₂O₃), silicon oxide (SiO₂)or aluminosilicate support adding up to 1 kg of the catalyst.

8. Hydrogenation catalyst based on palladium on an aluminium oxide (Al₂O₃), on a silicon oxide (SiO₂) or on an aluminosilicate support according to claim 7 comprising per kg of catalyst the palladium in an amount of from 2 to 8 g, preferably from 2 to 7 g, in particular from 2 to 6 g, more preferably from 2.5 to 5.5 g, and most preferably of about 3 g or of about 5 g.

9. Hydrogenation catalyst based on palladium on an aluminium oxide (Al₂O₃), on a silicon oxide (SiO₂) or on an aluminosilicate support according to anyone of claim 1 to 8, wherein the support is aluminium oxide (Al₂O₃), preferably a delta-aluminium oxide (delta-Al₂O₃).

10. Hydrogenation catalyst based on palladium on an aluminium oxide (Al₂O₃), on a silicon oxide (SiO₂) or on an aluminosilicate support according to anyone of claim 1 to 9, wherein the catalyst has a particle size in the range of from 0.2 to 5 mm, preferably 0.5 to 4 mm, more preferably 1 to 4 mm, most preferably 2 to 4 mm.

11. Process for the manufacture of a hydrogenation catalyst based on palladium on an aluminium oxide (Al₂O₃), on a silicon oxide (SiO₂) or on an aluminosilicate support according to anyone of claim 1 to 10, wherein the catalyst comprises palladium and tin, and wherein the catalyst optionally further comprises silver, the process comprising simultaneously or successively impregnating and/or precipitating the required amount by weight with respect to the total weight of the catalyst of palladium, tin, and optionally further silver, in any of the amounts as given in any of the claims 1 to 8 on the aluminium oxide (Al₂O₃), on the silicon oxide (SiO₂) or on an aluminosilicate support.

12. Use of a hydrogenation catalyst based on palladium on an aluminium oxide (Al₂O₃), on a silicon oxide (SiO₂) or on an aluminosilicate support according to anyone of claim 1 to 10, wherein the catalyst comprises palladium and tin, and wherein the catalyst optionally further comprises silver, in a process for the manufacture of hydrogen peroxide, preferably in a process for the manufacture of hydrogen peroxide by the autoxidation process (AO-process), more preferably in a small-to-medium scale AO-process (mini-AO process) which is run with a capacity of up to 20 ktpa, preferably with a capacity of up to 10 ktpa, (as 100 %) hydrogen peroxide production, and most preferably in such of said processes for the manufacture of hydrogen peroxide by the autoxidation process (AO-process) which are run without a reversion unit for regenerating the working solution.

13. Process for the manufacture of hydrogen peroxide comprising carrying out a hydrogenation reaction using a catalyst based on palladium on an aluminium oxide (Al₂O₃), on a silicon oxide (SiO₂) or on an aluminosilicate support according to anyone of claim 1 to 10, wherein the catalyst comprises palladium and tin, and wherein the catalyst optionally further comprises silver, preferably a process for the manufacture of hydrogen peroxide by the autoxidation process (AO-process), more preferably in a small-to-medium scale AO-process (mini-AO process) which is run with a capacity of up to 20 ktpa, preferably with a capacity of up to 10 ktpa, (as 100 %) hydrogen peroxide production, and most preferably in such of said processes for the manufacture of hydrogen peroxide by the autoxidation process (AO-process) which are run without a reversion unit for regenerating the working solution.

14. Process for the manufacture of hydrogen peroxide according to claim 13, **characterized in that** the hydrogenation reaction using a catalyst based on palladium on an aluminium oxide (Al₂O₃), on a silicon oxide (SiO₂)or on an aluminosilicate support according to anyone of claim 1 to 10 is a small-to-medium scale AO-process (mini-AO process) which is run with a capacity in the range of 2 to 15 ktpa, preferably in the range of 2 to 10 ktpa, (as 100 %) hydrogen peroxide production, and more preferably a small-to-medium scale AO-process (mini-AO process) with said capacity which is run without a reversion unit for regenerating the working solution.

15. Process for the manufacture of hydrogen peroxide according to anyone of claim 13 to 14, **characterized in that** the processes for the manufacture of hydrogen peroxide by the autoxidation process (AO-process), preferably the small-to-medium scale AO-process (mini-AO process), is run without a reversion unit for regenerating the working solution, and **characterized in that** the working solution and/or the catalyst are replaced and/or treated for regeneration or reactivation only intermittently with a low frequency, preferably **characterized in that** the working solution and/or the catalyst are replaced and/or treated for regeneration or reactivation only periodically after periods of at least 3 months, preferably at least 6 month, more preferably at least 9 months, and most preferred at least 12 months.
